(19) Europäisches Patentamt
European Patent Office
Office européen des brevets

(11) **EP 4 163 103 A1**

(12) **EUROPEAN PATENT APPLICATION**
published in accordance with Art. 153(4) EPC

(43) Date of publication:
**12.04.2023 Bulletin 2023/15**

(21) Application number: **21818062.8**

(22) Date of filing: **28.05.2021**

(51) International Patent Classification (IPC):
**B32B 5/18** (2006.01)     **B32B 27/18** (2006.01)
**B32B 27/30** (2006.01)     **B32B 27/32** (2006.01)
**B65D 57/00** (2006.01)     **B65D 85/48** (2006.01)

(52) Cooperative Patent Classification (CPC):
**B32B 5/18; B32B 27/18; B32B 27/30; B32B 27/32;
B65D 57/00; B65D 85/48**

(86) International application number:
**PCT/JP2021/020387**

(87) International publication number:
**WO 2021/246309 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.06.2020 JP 2020098256**

(71) Applicant: **JSP Corporation
Tokyo 100-0005 (JP)**

(72) Inventors:
• **TAKEUCHI Ryohei
Kanuma-shi, Tochigi 322-8511 (JP)**
• **NISHIMOTO Takashi
Kanuma-shi, Tochigi 322-8511 (JP)**

(74) Representative: **Mai Besier
European Trademark Attorneys
Patentanwälte
Kreuzberger Ring 18a
65205 Wiesbaden (DE)**

(54) **POLYETHYLENE-BASED RESIN MULTILAYER FOAM SHEET, INTERLEAF FOR GLASS SHEETS, AND METHOD FOR MANUFACTURING POLYETHYLENE-BASED RESIN MULTILAYER FOAM SHEET**

(57)     This multilayer foam sheet has a surface resistivity of $1 \times 10^{13}$ $\Omega$ or less and has a foam layer and resin layers that are laminated on both surfaces of the foam layer. The resin layers each have a multilayer structure formed from a surface layer and an intermediate layer that is positioned between the surface layer and the foam layer. The foam layer includes a polyethylene-based resin PE2. The intermediate layers are configured from an antistatic mixture containing a polyethylene-based resin PE3 and a polymeric antistatic agent. The surface layers are configured from a mixed resin containing a polyethylene-based resin PE4 and a polystyrene-based resin, and substantially do not contain the polymeric antistatic agent. The polystyrene-based resin content of the mixed resin is 3-35 wt%.

EP 4 163 103 A1

**Description**

Technical Field

The present invention relates to a multilayer foam sheet and, more specifically, to a polyethylene-based resin multilayer foam sheet that may be used as an interleaf sheet and a packaging material for electronic devices, etc., and to a method for manufacturing the same.

Related Art

A polyethylene-based resin foam sheet is used in the fields of cushioning materials, packaging materials, etc. because it has both flexibility and cushioning properties. However, the polyethylene-based resin foam sheet (hereinafter, also simply referred to as a foam sheet) has a problem that static electricity is easily generated and a problem that dust is apt to be attached to an article packaged therewith due to static electricity. Therefore, foam sheets imparted with antistatic performance are used for applications that dislike generation of static electricity and adhesion of dust.

As a foam sheet to which antistatic performance is imparted, there is known a foam sheet containing a polymeric antistatic agent. For example, Patent Document 1 discloses a multilayer foam sheet in which a surface layer composed of a polyolefin-based resin is laminated on one side or both sides of a polyolefin-based resin foam layer and in which the surface layer contains a polymeric antistatic agent. The foam sheet has excellent antistatic properties because the surface layer contains the polymeric antistatic agent. Therefore, such a foam sheet significantly reduces an amount of staining due to transference of organic substances such as low molecular weight components to an article packaged therewith as compared with a foam sheet using a surfactant as an antistatic agent. Accordingly, such a foam sheet is suitably used as an interleaf sheet or a packaging material for articles to be packaged, such as glass plates for a liquid crystal panel and electronic devices, which dislike adhesion of dust and low molecular weight components to surfaces thereof.

On the other hand, the foam sheet, when used as an interleaf sheet for glass plates and the like, is required to excel in handleability. Excellent handleability is a general term of excellent slippage, anti-blocking property and stiffness (or rigidity) of the foam sheet.

As used herein, "excellent slippage" is intended to mean that a frictional force generated between the foam sheet and an article packaged therewith is small, so that when, for example, glasses are packaged in such a manner that the foam sheet is interposed between them as an interleaf sheet for glass plates, transportation and overlaying of the foam sheet on the glass plates may be performed smoothly.

"Blocking" is a phenomenon in which when, for example, the foam sheet is cut to a desired size and stacked, the foam sheets stick to each other, so that the work of taking out the foam sheets one by one cannot be smoothly performed. "Anti-blocking property" refers to a property capable of preventing the occurrence of blocking.

Further, "excellent stiffness" means that when the foam sheet is cantilevered, an amount of horizontal sagging thereof is small. When the foam sheet is used as an interleaf sheet, a work of removing the foam sheet sandwiched between glass plates therefrom is carried out by vacuum suction. At that time, if an amount of horizontal sagging is small, the interleaf sheet can be easily removed. If the amount of horizontal sagging of the cantilevered foam sheet is large, on the other hand, the efficiency of the removing operation is significantly lowered. Therefore, the foam sheet used as an interleaf sheet is required to have good stiffness.

As a foam sheet having both excellent slippage and excellent stiffness, Patent Document 2 discloses a foam sheet with a three-layer structure which has a polyethylene-based resin foam layer and an antistatic layer that is provided on both sides of the foam layer and that contains a polyethylene-based resin, a polystyrene-based resin and a polymeric antistatic agent.

Prior Art Document

[Patent Document]

[Patent Document 1] Japanese Unexamined Patent Publication JP2008-308695A
[Patent Document 2] U. S. Patent Application Publication No. US201600311202A

## Summary of the Invention

Problems to be solved by the invention:

Recently, however, there has been a demand for a foam sheet that is less prone to stain an article packaged therewith as compared with the foam sheets disclosed in Patent Document 1 and Patent Document 2. That is, even in the foam sheet using the above-mentioned polymeric antistatic agent, there is a case where a slight amount of low molecular weight components contained in the polymeric antistatic agent itself is transferred to and stains an article packaged therewith. Thus, there is a strong demand for a polyethylene-based resin foam sheet that not only excels in handleability but also extremely reduces transference of low molecular weight components to an article packaged therewith.

The objective problem of the present invention is to provide an antistatic polyethylene-based resin multilayer foam sheet that has excellent stiffness, excellent slippage, excellent antistatic property and that is able to extremely reduce transference of low molecular weight components to an article packaged therewith, while maintaining excellent cushioning property inherent to a polyethylene-based resin foam sheet, and to provide a method for manufacturing the same.

Means for Solving the Problems:

In accordance with one aspect of the present invention, there is provided a multilayer foam sheet as follows:

[1] A polyethylene-based resin multilayer foam sheet comprising a foam layer, and a resin layer provided on each of both sides of the foam layer,

the resin layer having a multilayer structure comprising a surface layer that is located on an outermost surface side of the multilayer foam sheet, and an intermediate layer that is positioned between the surface layer and the foam layer,
the foam layer including a polyethylene-based resin PE2,
the intermediate layer being configured of an antistatic resin composition containing a polyethylene-based resin PE3 and a polymeric antistatic agent,
wherein
the surface layer is configured of a mixed resin containing a polyethylene-based resin PE4 and a polystyrene-based resin,
the mixed resin is substantially free of a polymeric antistatic agent,
a content of the polystyrene-based resin in the mixed resin is 3% by weight or more and 35% by weight or less, and
a surface resistivity of the polyethylene-based resin multilayer foam sheet is $1\times10^{13}$ Ω or less.

[2] The polyethylene-based resin multilayer foam sheet according to above [1], wherein the weight ratio of the polystyrene-based resin to the polyethylene-based resin PE4 in the mixed resin is 0.03 or more and 0.4 or less.
[3] The polyethylene-based resin multilayer foam sheet according to above [1] or [2], wherein the content of the polystyrene-based resin in the mixed resin is 3% by weight or more and 12% by weight or less.
[4] The polyethylene-based resin multilayer foam sheet according to any one of above [1] to [3], wherein a content of the polymeric antistatic agent in the antistatic resin composition is 5% by weight or more and 25% by weight or less based on the total weight of the polyethylene-based resin PE3 and the polymeric antistatic agent.
[5] The polyethylene-based resin multilayer foam sheet according to any one of above [1] to [4], wherein the polymeric antistatic agent is an ionomer resin.
[6] The polyethylene-based resin multilayer foam sheet according to above [5], wherein the antistatic resin composition contains a polyalkylene glycol and a content of the polyalkylene glycol is 0.3 to 6 parts by weight based on 100 parts by weight of the total of the polyethylene-based resin PE3 and the polymeric antistatic agent.
[7] The polyethylene-based resin multilayer foam sheet according to any one of above [1] to [6], wherein a content of the polymeric antistatic agent per $1m^2$ of the intermediate layer is 0.15 g or more and 2 g or less and wherein a ratio (B4/A) of a basis weight B4 [$g/m^2$] of the surface layer to the content A [$g/m^2$] of the polymeric antistatic agent is 1 or more and 30 or less.
[8] The polyethylene-based resin multilayer foam sheet according to any one of above [1] to [7], wherein the basis weight B4 of the surface layer is 0.5 $g/m^2$ or more and 10 $g/m^2$ or less.
[9] The polyethylene-based resin multilayer foam sheet according to any one of above [1] to [8], wherein the polyethylene-based resin PE2 is low density polyethylene and the polyethylene-based resin PE3 is low density polyethylene.

[10] The polyethylene-based resin multilayer foam sheet according to any one of above [1] to [9], wherein a melt flow rate of the polyethylene-based resin PE2 at a temperature of 190°C and a load of 2.16 kg is 0.1 g/10min or more and 1.5 g/10min or less.

[11] The polyethylene-based resin multilayer foam sheet according to any one of above [1] to [10], having a closed cell content of 40% or more.

In another aspect, the present invention provides:

[12] Use of the polyethylene-based resin multilayer foam sheet according to any one of above 1 to 11 as an interleaf sheet for glass plates.

In a further aspect, the present invention provides:

[13] A method for producing a polyethylene-based resin multilayer foam sheet having a surface resistivity of $1 \times 10^{13}$ $\Omega$ or less and having a multilayer structure in which a first surface layer, a first intermediate layer, a foam layer, a second intermediate layer and a second surface layer are laminated in this order, said method comprising the steps of:

providing a foamable melt M2 for forming the foam layer, containing a polyethylene-based resin PE2 and a physical blowing agent, a melt M3 for forming the first and second intermediate layers, configured of an antistatic resin composition containing a polyethylene-based resin PE3 and a polymeric antistatic agent, and a melt M4 for forming the first and second surface layers, configured of a mixed resin containing a polyethylene-based resin PE4 and a polystyrene-based resin and being free of a polymeric antistatic agent,
laminating the melts M4, M3, M2, M3 and M4 in this order within a die to form a laminated mass, and coextruding the laminated mass from the die to expand the foamable melt M2,
wherein the polystyrene-based resin is contained in the mixed resin composition in an amount of 3% by weight or more and 35% by weight or less based on the weight of the mixed resin composition.

Effect of the invention:

The multilayer foam sheet of the present invention has an excellent antistatic property with a surface resistivity of $1 \times 10^{12}$ $\Omega$ or less, since each of the paired resin layers laminated on and adhered to each of the both sides of the foam layer thereof has a two-layer structure composed of an outermost surface layer and an intermediate layer, and since the intermediate layer contains a polymeric antistatic agent. Further, in the multilayer foam sheet, since the surface layer covering the intermediate layer is substantially free of a polymeric antistatic agent, transfer of low molecular weight components and the like to an article packaged therewith is suppressed to an extremely small extent. Additionally, since the surface layer contains a specific amount of a polystyrene-based resin, the foam sheet is excellent in handleability (slippage, anti-blocking property and stiffness).

Brief Description of Drawings

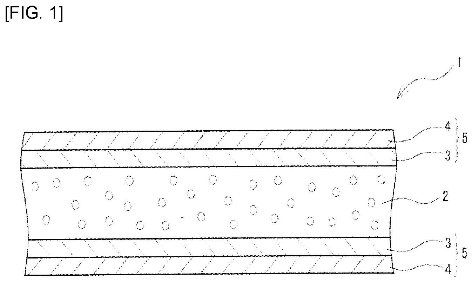

FIG. 1 is a schematic cross-sectional view showing one embodiment of the multilayer foam sheet according to the present invention.

Embodiments of the Invention

The polyethylene-based resin multilayer foam sheet of the present invention will be described in detail below.
As shown in FIG. 1, the polyethylene-based resin multilayer foam sheet 1 of the present invention (hereinafter, also referred to as a multilayer foam sheet or simply as a foam sheet) has a foam layer 2 and a resin layer 5 provided on each of the both surfaces of the foam layer 2. Each of the resin layers 5 has a multilayer structure including a surface layer 4 located on the outermost surface side of the multilayer foam sheet 1 (hereinafter also simply referred to as a surface layer) and an intermediate layer 3 located between the surface layer 4 and the foam layer 2. That is, the multilayer foam sheet 1 specifically shown in FIG. 1 has a five-layer structure composed of a resin layer 5 (surface layer 41 intermediate layer 3) / foam layer 2 / resin layer 5 (intermediate layer 31 surface layer 4). The foam sheet 1 of the present invention is not limited to such a five-layer structure. As long as the gist and effect of the present invention are not adversely affected, a 6-layer structure or a 7-layer structure may be adopted by providing an additional layer formed of a polymer such as a resin between the foam layer and one or both resin layers (not shown).
The following description is made with respect to one of the paired resin layers 5 for the sake of brevity, but the description also applies to the other resin layer. It should be noted that the two resin layers 5 may have the same or different configurations as long as the requirements described in detail below are met. For example, the kind and amount of the resin component and additives and physical property values, such as the basis weight, of one of the two surface layers 4 may be the same as or different from those of the other surface layer.

As used herein, the numerical range "A to B" is intended to include the lower limit "A" and the upper limit "B" and is, therefore, synonymous with "A or more and B or less".

It is preferred that the resin layer 5 (surface layer 4 and/or intermediate layer 3) is not foamed (is non-foam). However, very small cells may be present to the extent that the mechanical strength of the obtained foam sheet 1 is not adversely affected. When the resin layer 5 is non-foam, the stiffness of the multilayer foam sheet 1 becomes more excellent.

The multilayer foam sheet 1 of the present invention exhibits excellent antistatic properties with a surface resistivity of $1 \times 10^{13}$ $\Omega$ or less because the intermediate layer 3 contains a polymeric antistatic agent as will be described hereinafter. On the other hand, since the surface layer 4 does not contain a polymeric antistatic agent, low molecular weight components contained in the polymeric antistatic agent is prevented from being transferred to an article to be packaged. Further, since the surface layer 4 contains a specific amount of a polystyrene-based resin, the handleability (slippage, anti-blocking property, stiffness, etc.) is excellent.

Description will be next made of the materials constituting the foam layer 2, the surface layer 4 and the intermediate layer 3. The foam layer 2 is configured of a base polymer containing a polyethylene-based resin PE2, the intermediate layer 3 is configured of an antistatic resin composition (hereinafter also referred to simply as resin composition R3) containing a polyethylene-based resin PE3 and a polymeric antistatic agent, and the surface layer 4 is configured of a mixed resin (hereinafter also referred to as mixed resin R4) containing a polyethylene-based resin PE4 and a polystyrene-based resin.

In the present specification, the polyethylene-based resins PE2, PE3 and PE4 are each intended to mean a polyethylene-based resin containing 50 mol% or more, preferably 60 mol% or more, more preferably 70 mol% of ethylene components. Specific examples of the polyethylene-based resins include low density polyethylene (LDPE), ethylene-vinyl acetate copolymer (EVA), linear low density polyethylene (LLDPE), very low density polyethylene (VLDPE), and mixtures thereof. The low density polyethylene refers to a polyethylene-based resin which has a long chain branched structure and which has a density of 910 kg/m³ or more and less than 930 kg/m³; the linear low density polyethylene refers to a polyethylene-based resin which is a copolymer of ethylene and an $\alpha$-olefin having 4 to 8 carbon atoms, which has a substantially linear molecular chain and which has a density of 910 kg/m³ or more and less than 930 kg/m³; and the high density polyethylene refers to a polyethylene-based resin which is an ethylene homopolymer or a copolymer of ethylene and $\alpha$-olefin having 4 to 8 carbon atoms and which has a density of 930 kg/m³ or more.

The foam layer 2 is configured of a base polymer containing a polyethylene-based resin PE2. That is, the foam layer 2 contains the polyethylene-based resin PE2. Specifically, a content of the polyethylene-based resin PE2 in the foam layer is 50% by weight or more, preferably 60% by weight or more, more preferably 70% by weight or more, still more preferably 80% by weight or more, particularly most preferably 90% by weight or more. As used herein, the term "base polymer" is intended to mean any polymer, resin or composition that is capable of forming a foam with a multiplicity of cells by extrusion foaming.

It is preferred that the polyethylene-based resin PE2 contains low density polyethylene in an amount of 50% by weight or more for reasons that the low density polyethylene has excellent foamability and gives a multilayer foam sheet having more excellent cushioning properties. From this point of view, the polyethylene-based resin PE2 preferably contains low density polyethylene in an amount of 80% by weight or more, more preferably 90% by weight or more.

A melt flow rate (MFR) of the polyethylene-based resin PE2 is preferably 0.1 to 20 g/10 min, more preferably 0.1 to 10 g/10 min, still more preferably 0.1 to 5 g/10 min, because of excellent foamability thereof. The multilayer foam sheet of the present invention is preferably produced by a coextrusion method, and in that case, it is particularly preferable to use a polyethylene-based resin (A) having a melt flow rate (MFR) of 0.1 to 1.5 g/10 min. The reason for this will be described in detail in the section of the method for manufacturing the multilayer foam sheet.

As used herein, the melt flow rate (MFR) of the polyethylene-based resin refers to a melt mass flow rate measured under the conditions of 190°C and a load of 2.16 kg according to JIS K 7210-1(2014).

If necessary, an additional polymer such as a resin and an elastomer other than the polyethylene-based resin may be incorporated into the base polymer which contains the polyethylene-based resin PE2 and which constitutes the foam layer. When such an additional polymer is blended, the blending amount is preferably 20 parts by weight or less, more preferably 10 parts by weight or less, still more preferably 5 parts by weight or less, particularly preferably 3 parts by weight or less, based on 100 parts by weight of the polyethylene-based resin (PE2) constituting the foam layer.

The base polymer constituting the foam layer may be added with additives such as a cell controlling agent, a nucleating agent, an antioxidant, a heat stabilizer, a weatherability agent, an ultraviolet absorber, a flame retardant, an antibacterial agent, a shrinkage inhibitor and an inorganic filler, as long as the object and effect of the present invention are not adversely affected.

Next, the materials constituting the intermediate layer 3 will be described. The intermediate layer is configured of an antistatic resin composition R3 containing a polyethylene-based resin PE3 and a polymeric antistatic agent. That is, the intermediate layer includes the polyethylene-based resin PE3 and the polymeric antistatic agent. The polyethylene-based resin PE3 is the main component of the intermediate layer. Specifically, the content of the polyethylene-based resin is preferably 50% by weight or more, more preferably 60% by weight or more, still more preferably 70% by weight or more, based on the weight of the intermediate layer (namely, the weight of the antistatic resin composition R3).

It is preferred that the polyethylene-based resin PE3 used is of the same kind as the polyethylene-based resin PE2 constituting the foam layer because of excellent adhesiveness to the foam layer. Specifically, low density polyethylene is preferably used. However, different kind of polyethylene-based resin may be also be used.

Because the antistatic resin composition (R3) constituting the intermediate layer contains a polymeric antistatic agent, the multilayer foam sheet of the present invention exhibits excellent antistatic properties, although the surface layer is laminated on the intermediate layer. Specifically, the surface resistivity of the multilayer foam sheet should be $1 \times 10^{13}$ Ω or less, preferably $5 \times 10^{12}$ Ω or less, more preferably $1 \times 10^{12}$ Ω or less, particularly preferably $5 \times 10^{11}$ Ω or less. The lower limit of the surface resistivity is not particularly limited, but is generally $1 \times 10^{7}$ Ω. A multilayer foam sheet having a surface resistivity in such a range is less likely to accumulate static charges and to be less likely to adhere dust.

The surface resistivity of the multilayer foam sheet is a value measured in accordance with JIS K6271(2001). More specifically, a test piece (length 100 mm × width 100 mm × thickness: thickness of the object to be measured) is first cut out from the multilayer foam sheet to be measured and is allowed to stand for 24 hours in an atmosphere having a temperature of 23°C and a relative humidity of 50% for the conditioning of the test piece. A voltage of 500 V is then impressed on the surface of the test piece in an atmosphere of a temperature of 23°C and a relative humidity of 50% and measured for the surface resistivity 1 minute after the commencement of the voltage impression.

The polymeric antistatic agent is configured of a resin having a surface resistivity of generally less than $1 \times 10^{12}$ Ω, preferably less than $1 \times 10^{11}$ Ω, more preferably less than $1 \times 10^{10}$ Ω. Specific examples thereof include polyethers, polyether ester amides, block copolymers of polyethers and polyolefins and ionomer resins. Among these, block copolymers of polyether and polyolefin and ionomer resins are more preferable, with the ionomer resins being particularly preferable.

The ionomer resin has a low surface resistivity, is capable of imparting good antistatic performance to the multilayer foam sheet and, additionally, has a low content of low molecular weight components. Therefore, staining of an article to be packaged due to the transference of low molecular weight components thereto may be significantly suppressed.

A foam sheet containing an ionomer resin tends to become inferior in slippage as compared with foam sheets containing other polymeric antistatic agents such as a polyether-polyolefin block copolymer. On the other hand, in the present invention, since the intermediate layer containing the ionomer resin is covered with the surface layer described hereinafter, the foam sheet containing the ionomer resin is able to prevent the slippage from being lowered.

The ionomer resin is a resin in which the molecules of a copolymer of an olefin and an unsaturated carboxylic acid are cross-linked with metal ions. Examples of the olefin include ethylene and propylene. Examples of unsaturated carboxylic acids include acrylic acid, methacrylic acid and maleic acid. Examples of the metal ion include lithium, sodium and potassium. Above all, an ionomer resin containing potassium as a metal ion, particularly a potassium-containing ionomer resin which is a copolymer of ethylene and an unsaturated carboxylic acid, is preferable because it can impart good antistatic performance to the foam sheet.

It is preferred that the surface resistivity of the ionomer resin is less than $1 \times 10^{12}$ Ω. By forming the antistatic layer using an ionomer resin having a surface resistivity of less than $1 \times 10^{12}$ Ω, a foam sheet having excellent antistatic performance may be obtained in a stable manner. For this reason, the surface resistivity is more preferably $1 \times 10^{11}$ Ω or less, more preferably $1 \times 10^{10}$ Ω or less, particularly preferably $1 \times 10^{9}$ Ω or less.

The surface resistivity of the ionomer resin may be measured by the same method as the measurement of the surface resistivity of the multilayer foam sheet.

Specific examples of the polymeric antistatic agent include, for instance, block copolymers of polyether and polyolefin such as "Perestat 300", "Perestat 230", "Perestat HC250", "Perectron PVH", "Perectron PVL", "Perectron HS" and "Perectron LMP" manufactured by Sanyo Kasei Kogyo Co., Ltd., and ionomer resins commercially available under trade names such as "Entila SD100" and "Entila MK400" from Mitsui-DuPont Polychemical Co., Ltd.

The content of the polymeric antistatic agent in the antistatic resin composition R3 (namely, the intermediate layer) is preferably 5 to 25% by weight based on 100% by weight of the total of the polyethylene-based resin PE3 and the polymeric the antistatic agent, although it depends on the performance of the polymeric antistatic agent itself. When the content (concentration) of the polymeric antistatic agent is 5% by weight or more, the conductive network structure of the polymeric antistatic agent is stably formed in the intermediate layer, so that the antistatic performance is evenly exhibited throughout the foam sheet, despite that the surface layer is laminated on the intermediate layer. Further, when the content is 25% by weight or less, staining of an article to be packaged due to transference of low molecular weight components derived from the polymeric antistatic agent can be further reduced. Additionally, it is possible to more reliably prevent a decrease in slippage due to the polymeric antistatic agent. For these reasons, the lower limit of the content is more preferably 7% by weight, still more preferably 9% by weight, while the upper limit of the content is more preferably 20% by weight, still more preferably 15% by weight.

The content A of the polymeric antistatic agent per 1 m² of the intermediate layer is preferably 0.15 to 2 g/m². The content A represents the absolute amount of the polymeric antistatic agent contained in the unit area of the intermediate layer.

When the content A is 0.15 g/m² or more, the antistatic performance of the multilayer foam sheet can be uniformly and stably exhibited. For this reason, the lower limit of the content A is more preferably 0.18 g/m², still more preferably 0.19 g/m², particularly preferably 0.2 g/m². On the other hand, when the content A is 2 g/m² or less, organic substances such as low molecular weight components in the polymeric antistatic agent contained in the intermediate layer 3 are less likely to bleed out on the surface of the surface layer 4. For this reason, the upper limit of the content A is more preferably 1.5 g/m², still more preferably 1.0 g/m², particularly preferably 0.8 g/m². It is preferred that the intermediate layer 3 is non-foam in order to exhibit a sufficient antistatic effect while keeping the value of the content A in the above range.

The content A is a value of one of the pair of intermediate layers 3 provided on both sides of the foam layer 2.

In the present invention, it is preferred that a ratio B4/A of the basis weight B4 [g/m²] of the surface layer 4 to the content A [g/m²] of the polymeric antistatic agent per 1 m² of the intermediate layer 3 is 1 to 30. When the ratio is within this range, a balance between the antistatic property and stain prevention property becomes more excellent.

The ratio B4/A is an index showing a ratio of the basis weight B4 of the surface layer 4 to the weight of the polymeric antistatic agent contained in the intermediate layer 3 per unit area thereof. In order to suppress the transference of low molecular weight components contained in the polymeric antistatic agent to an article to be packaged therewith, it is preferable either to reduce the content A of the polymeric antistatic agent or to increase the basis weight B4 of the surface layer 4 (to increase the thickness of the surface layer 4). On the other hand, in order for the foam sheet to exhibit sufficient antistatic performance, it is preferable either to increase the content A of the polymeric antistatic agent or to reduce the basis weight B4 of the surface layer (to reduce the thickness of the surface layer). In the foam sheet of the present invention, the ratio B4/A is preferably within the above range in order to suppress the transference of low molecular weight components and to exhibit sufficient antistatic performance.

From the viewpoint of achieving both antistatic property and stain prevention property in a more balanced manner, the lower limit of the ratio B4/A is preferably 2, more preferably 3, still more preferably 4, while the upper limit of the ratio is preferably 25, more preferably 20, still more preferably 15, particularly preferably 10.

When an ionomer resin is used as the polymeric antistatic agent, it is preferred that a polyalkylene glycol is incorporated into the intermediate layer 3 for reasons that the ionomer resin can be uniformly dispersed in the intermediate layer and that the foam sheet is thereby able to exhibit excellent antistatic properties in a stable manner. That is, when a foam sheet is produced by coextrusion and when a melt to be extruded for forming an intermediate layer (namely, the melted antistatic resin composition R3) contains a polyalkylene glycol, the ionomer resin may be satisfactorily dispersed in the polyethylene-based resin PE3, so that a multilayer foam sheet having excellent antistatic performance can be obtained even though the intermediate layer is covered with the surface layer.

Further, the presence of the polyalkylene glycol in the intermediate layer contributes to reduction of the humidity dependence of the antistatic performance so that the obtained multilayer foam sheet exhibits good antistatic performance even under low humidity conditions.

As the polyalkylene glycol, a polyalkylene glycol having an HLB value of 8 or more may be preferably used. Examples of such a polyalkylene glycol include polyethylene glycol and polyoxyethylene polyoxypropylene glycol. Further, two or more kinds of polyalkylene glycols may be used in combination. Among these, polyethylene glycol is preferably used since it can stably disperse the ionomer resin in the polyethylene-based resin and can further reduce the humidity dependence of the antistatic performance while enhancing the antistatic performance.

In the present invention, the HLB value is obtained by the Griffin method using the following equation:

$$HLB = 20 \times Mh/Mw$$

where Mh is a molecular weight of the hydrophilic portion of the hydrophilic compound and Mw is a molecular weight of the whole hydrophilic compound.

It is preferred that the polyalkylene glycol is contained in the antistatic resin composition R3 (namely, the intermediate layer) in an amount of 0.3 to 8 parts by weight based on 100 parts by weight of the total of the polyethylene-based resin PE3 and the polymeric antistatic agent. When polyethylene glycol is used as the polyalkylene glycol, the content thereof is preferably 0.3 to 6 parts by weight based on 100 parts by weight of the total of the polyethylene-based resin PE3 and the polymeric antistatic agent. The lower limit thereof is more preferably 0.35 parts by weight, still more preferably 0.4 parts by weight, while the upper limit thereof is more preferably 5 parts by weight, still more preferably 3 parts by weight, particularly preferably 2 parts by weight.

When an ionomer resin is used as the antistatic agent, the weight ratio of the polyalkylene glycol to the ionomer resin is preferably 0.03 to 0.5 for reasons that the ionomer resin can be better dispersed in the polyethylene-based resin. From this point of view, the weight ratio is more preferably 0.04 to 0.3.

The antistatic resin composition R3 constituting the intermediate layer may contain other polymers, additives, etc. in addition to the polyethylene-based resin PE3 and the polymeric antistatic agent as long as the object and effect of the present invention is not adversely affected.

Incidentally, it is preferred that the antistatic resin composition R3, namely, the intermediate layer, is substantially free of the polystyrene-based resin. More specifically, the content of the polystyrene-based resin in the antistatic resin composition R3 is preferably 5% by weight or less, more preferably 3% by weight or less, still more preferably 2 parts by weight or less, particularly preferably 0. By reducing the content of the polystyrene-based resin in the antistatic resin composition R3, it is possible to further increase the closed cell content of the multilayer foam sheet, to further improve the stiffness and cushioning properties thereof and, additionally, to develop recyclability thereof.

Next, the material constituting the surface layer 4 will be described.

The surface layer is composed of a mixed resin R4 containing a polyethylene-based resin PE4 and a polystyrene-based resin. That is, the surface layer contains polyethylene-based resin PE4 and polystyrene-based resin. The polyethylene-based resin PE4 is the major component of the surface layer. Specifically, it is preferred that a content of the polyethylene-based resin PE4 is preferably 50% by weight or more, still more preferably 60% by weight or more, yet still more preferably 70% by weight or more, based on the weight of the surface layer (namely, the weight of the resin mixture R4).

As the polyethylene-based resin PE4, the polyethylene-based resin exemplified as the polyethylene-based resin PE3 may be used. The use of the resin of the same kind of the polyethylene-based resin PE3 is preferred because the resulting resin layer 5 shows excellent adhesion between the surface layer 4 and the intermediate layer 3 thereof. Specifically, the polyethylene-based resin PE4 preferably contains low density polyethylene in an amount of 50% by weight or more. Further, when linear low density polyethylene is used as the polyethylene-based resin PE4, the amount of transference of low molecular weight components may be further suppressed. However, different kinds of polyethylene-based resins may be also used.

The mixed resin R4 is substantially free of a polymeric antistatic agent. Since the surface layer is located on the outermost surface side of the foam sheet and is brought into direct contact with an article to be packaged therewith, when the mixed resin R4 constituting the surface layer does not contain a polymeric antistatic agent, it is possible to prevent low molecular weight components contained in the polymeric antistatic agent from staining the packaged article due to the transference thereof. Further, since the polymeric antistatic agent is contained in the intermediate layer, the desired antistatic property can be exhibited despite that the surface layer does not contain a polymeric antistatic agent.

In the present invention, "substantially free of a polymeric antistatic agent" means that the content of the polymeric antistatic agent is approximately 3% by weight or less (including 0) based on the weight of the mixed resin R4 (namely, the surface layer). The content is more preferably 1% by weight or less (including 0). It is particularly preferable that the mixed resin R4 does not contain the polymer antistatic agent, namely, the content thereof is 0, in order to suppress the transference of the low molecular weight component.

Further, in the multilayer foam sheet of the present invention, it is preferable that the surface layer does not substantially contain other antistatic agents than the polymeric antistatic agent, either. Examples of such other antistatic agents than the polymeric antistatic agent include a surfactant.

The mixed resin R4 constituting the surface layer 4 of the multilayer foam sheet of the present invention contains a polystyrene-based resin (PS) in a specific amount. As a consequence, the multilayer foam sheet excels in slippage, anti-blocking property and stiffness.

Examples of the polystyrene-based resin include polystyrene (general-purpose polystyrene), rubber-modified polystyrene (impact-resistant polystyrene), a styrene-$\alpha$-methylstyrene copolymer, a styrene-p-methylstyrene copolymer, a styrene-acrylic acid copolymer, a styrene-methacrylic acid copolymer, a styrene-maleic anhydride copolymer, a styrene-methyl methacrylate copolymer, a styrene-ethyl methacrylate copolymer, a styrene-methyl acrylate copolymer, a styrene-ethyl acrylate copolymer and a styrene-acrylonitrile copolymer. Above all, polystyrene or rubber-modified polystyrene is preferred, and polystyrene is more preferred.

A content of the polystyrene-based resin in the mixed resin R4 (namely, the surface layer) is 3% by weight or more and 35% by weight or less based on the weight of the mixed resin R4. When the content of the polystyrene-based resin in the surface layer is less than 3% by weight, there is a possibility that the slippage of the foam sheet may be insufficient depending on an application purpose thereof. In addition, there is a fear that blocking may occur when the foam sheets are stacked and stored. In order to further improve the slippage and anti-blocking property of the foam sheet, it is preferable that the polystyrene-based resin is contained in the mixed resin R4 in an amount of 4% by weight or more.

When, on the other hand, the content of the polystyrene-based resin is more than 35% by weight, there is a possibility that the stiffness of the foam sheet may decrease. In addition, the excellent cushioning property inherent in the foam sheet may not be maintained. In order to improve the stiffness while maintaining the excellent cushioning property of the foam sheet, the content of the polystyrene-based resin in the mixed resin R4 is preferably 30% by weight or less, more preferably 25% by weight or less, still more preferably 20% by weight or less, particularly preferably 12% by weight or less, most preferably 8% by weight or less.

In the present invention, when the content of the polystyrene-based resin in the mixed resin R4 constituting the surface layer 4 is within the above range, the stiffness becomes higher as the content decreases. On the other hand, the stiffness tends to decrease as the content of the polystyrene-based resin increases. The reason why the stiffness decreases as the content of the polystyrene-based resin, which is a resin having a higher rigidity than the polyethylene-based resin PE4, increases, is not clear, but is considered as follows. That is, when the foam sheet of the present invention is produced by coextrusion and when the content of the polystyrene-based resin in the mixed resin R4 for forming the surface layer becomes large, the melt viscosity of the melt for forming the surface layer (namely, the melted mixed resin R4) increases since the fluidity of the molten polystyrene-based resin is lower than that of the molten polyethylene-based resin PE4 at the vicinity of extrusion temperature. For this reason, the foamable melt for forming the foam layer which is co-extruded in the co-extrusion die, generates heat to cause a reduction of the closed cell content of the obtained foam layer. It is inferred that, as a result of this, the stiffness of the multilayer foam sheet is reduced.

Further, it is preferred that a ratio PS(C)/PE(C) of the content (PS(C)) of the polystyrene-based resin (PS) to the content (PE(C)) of the polyethylene-based resin PE4 in the mixed resin R4 is 0.03 to 0.6. The fact that the ratio PS(C)/PE(C) is within this range means that the content of the polystyrene-based resin (PS) is lower than that of the polyethylene-based resin PE4. When the surface layer 4 contains the polystyrene-based resin in such an amount as to provide a ratio PS(C)/PE(C) within the above range, the stiffness, slippage and anti-blocking property thereof are further improved. In addition, the thickness recovering property after manufacturing the foam sheet is improved. In order to maintain good stiffness of the foam sheet, the upper limit of the ratio PS(C)/PE(C) is preferably 0.4, more preferably 0.3, still more preferably 0.2, particularly preferably 0.1. Further, in order to improve the slippage and anti-blocking property of the foam sheet, the lower limit of the ratio PS(C)/PE(C) is more preferably 0.04.

In order to improve the slippage of the foam sheet, a tensile strength of the mixed resin R4 constituting the surface layer 4 is preferably 10 MPa or more. The tensile strength may be adjusted by changing the content of the polystyrene-based resin in the mixed resin R4 within the above range.

The tensile strength of the mixed resin R4 may be measured according to JIS K6767(1999) under the condition of a test speed of 500 mm/min using a test piece punched into a dumbbell form No. 1 type, and the calculated value is adopted.

The mixed resin R4 preferably contains a compatibilizing agent for the polyethylene-based resin PE4 and the polystyrene-based resin. Since the compatibilizing agent can improve the film-forming property of the mixed resin R4, a good surface layer can be formed even when the basis weight of the surface layer is small.

Examples of the compatibilizing agent include styrene-butadiene copolymers, styrene-isoprene copolymers and styrene-based elastomers such as hydrogenation products of these copolymers. The copolymers are preferably block copolymers.

The content of the compatibilizing agent in the mixed resin R4 is preferably 1 to 20 parts by weight based on 100 parts by weight of the total of the polyethylene-based resin PE4, the polystyrene-based resin and the compatibilizing agent. The lower limit of the content is more preferably 2 parts by weight, and the upper limit thereof is more preferably 15 parts by weight, still more preferably 10 parts by weight.

The multilayer foam sheet of the present invention has a higher stiffness than that of the conventional foam sheet, since the mixed resin R4 constituting the surface layer thereof contains a predetermined amount of the polystyrene-based resin. Further, the multilayer foam sheet is excellent in followability at the time of, for example, vacuum suction. Therefore, even when the thickness is thin, the foam sheet can be handled in the same manner as the conventional large thickness sheets. When the compatibilizing agent is present in the mixed resin R4, the dispersibility of the polystyrene-based resin in the polyethylene-based resin PE4 is improved in the mixed resin R4, so that the foam sheet has more improved handleability such as stiffness.

Next, various physical properties of the multilayer foam sheet of the present invention will be described.

A basis weight of the whole multilayer foam sheet of the present invention is preferably 5 to 100 $g/m^2$, more preferably 10 to 90 $g/m^2$, still more preferably 20 to 80 $g/m^2$, and particularly preferably 25 to 50 $g/m^2$. When the basis weight of the multilayer foam sheet is within this range, the balance between its lightness in weight and the mechanical properties is good.

A basis weight B3 of the intermediate layer 3 is preferably 1 to 10 $g/m^2$. When the basis weight B3 of the intermediate layer is 1 $g/m^2$ or more, a variation of the antistatic property (surface resistivity) in respective parts thereof is small. From this point of view, the basis weight B3 is more preferably 1.5 $g/m^2$ or more, still more preferably 1.8 $g/m^2$ or more. Further, when the basis weight B3 is 10 $g/m^2$ or less, transference of low molecular weight components derived from the polymeric antistatic agent is more likely to be suppressed, the closed cell content of the foam sheet can be further increased, and the stiffness of the foam sheet can be further improved. From this point of view, the basis weight B3 of the intermediate layer is more preferably 8 g/m$^2$ or less, still more preferably 6 g/m$^2$ or less.

The basis weight B4 of the surface layer 4 is preferably 0.5 to 10 g/m$^2$. When the basis weight B4 is within this range, it is possible to more effectively suppress bleed-out of the low molecular weight components derived from the polymeric antistatic agent and to more reliably exhibit good antistatic properties. In order to achieve both suppression of bleed-out and development of antistatic properties in a well-balanced manner, the lower limit of the basis weight B4 is more preferably 0.8 g/m$^2$, still more preferably 1.0 g/m$^2$. The upper limit of the basis weight B4 is more preferably 8 g/m$^2$, more preferably 5 g/m$^2$, particularly preferably 3 g/m2.

It is preferred that a ratio B4/B3 of the basis weight B4 of the surface layer to the basis weight B3 of the intermediate layer is 0.05 to 10, more preferably 0.1 to 3, still more preferably 0.2 to 2, particularly preferably 0.3 to 1.5. When the ratio B4/B3 is within the above range, it is possible to achieve both suppression of transference of low molecular weight components derived from the polymeric antistatic agent and antistatic properties in a more balanced manner.

A basis weight of the resin layer 5 (total of the basis weight B4 of the surface layer and the basis weight B3 of the intermediate layer) is preferably 20 g/m$^2$ or less. When the basis weight of the resin layer is within this range, the lightness of the foam sheet may not be adversely affected and, also, the cushioning property required for use as an interleaf sheet, etc. may be secured. Further, when the resin layer 5 (intermediate layer 3 and surface layer 4) is laminated on the foam layer 2 by coextrusion described hereinafter, it is possible to form the foam layer 2 having a good cell structure. For such reasons, the basis weight of the resin layer is more preferably 15 g/m$^2$ or less, more preferably 10 g/m$^2$ or less, particularly preferably 8 g/m$^2$ or less. On the other hand, the lower limit of the basis weight of the resin layer 5 is preferably 1 g/m$^2$, more preferably 2 g/m$^2$, in consideration of appropriate stiffness when used as an interleaf sheet, etc.

The above-mentioned basis weights are those of the resin layer 5, surface layer 4 and intermediate layer 3 provided on one of both sides of the foam layer 2. In the two resin layers, two surface layers and two intermediate layers, the basis weight of one of the layers is preferably the same as that of the other corresponding layer, although they may differ from each other.

From the viewpoint of better balancing of the suppression of transference of low molecular weight components derived from the polymeric antistatic agent and the antistatic property, it is most preferred that the amount of the polymeric antistatic agent per 1 m$^2$ of the intermediate layer is 0.15 g or more and 2 g or less, the ratio (B4/A) of the basis weight B4 [g/m$^2$] of the surface layer to the content A [g/m$^2$] of the polymeric antistatic agent is 1 or more and 30 or less, and the basis weight B4 of the surface layer is 0.5 g/m$^2$ or more and 10 g/m$^2$ or less.

The apparent density of the multilayer foam sheet 1 of the present invention is preferably 10 to 300 kg/m$^3$. When the apparent density of the foam sheet is within the above range, the foam sheet has an excellent balance between mechanical properties such as high stiffness, light weight and cushioning property. From this point of view, the lower limit of the apparent density is more preferably 15 kg/m$^3$, still more preferably 20 kg/m$^3$. The upper limit of the apparent density, on the other hand, is more preferably 200 kg/m$^3$, still more preferably 100 kg/m$^3$.

A total thickness of the foam sheet is preferably 0.05 to 3 mm, more preferably 0.1 to 2 mm, still more preferably 0.3 to 1.8 mm, particularly preferably 0.5 to 1.5 mm. When the thickness of the foam sheet is within this range, the balance between cushioning property and flexibility is good and, additionally, the stiffness becomes better.

In the present invention, the thickness, basis weight, and apparent density of the multilayer foam sheet are measured as follows.

First, a multilayer foam sheet is cut vertically (namely, in the thickness direction) along its transverse direction (namely, in a direction perpendicular to the extrusion direction) to obtain a rectangular test piece having a length [mm] equal to the whole width of the sheet and a width of 100 mm. Similar operation is repeated at different positions on the foam sheet to obtain a total of 5 test pieces. The thickness of each test piece is measured at 1 cm intervals in the transverse direction of the foam sheet. The arithmetic mean value of the obtained thickness values is the thickness [mm] of the multilayer foam sheet. In addition, the weight [g] of each test piece is measured. The measured weight is divided by the area [m$^2$] of the test piece (namely, the width of the sheet [m] $\times$ 100 mm (0.1 m)). The arithmetic mean value of the obtained five values is the basis weight [g/m$^2$] of the multilayer foam sheet. The apparent density [kg/m$^3$] of the multilayer foam sheet is determined by dividing the basis weight [g/m$^2$] of the foam sheet obtained above by the thickness [m] of the foam sheet obtained above with appropriate unit conversion.

The basis weights of the intermediate layer 3 and surface layer 4 may be determined from the thickness of each layer and the density of a resin composition that constitutes each layer. More specifically, a multilayer foam sheet is vertically (namely in the thickness direction) cut along the transverse direction thereof and the vertical cross section is photographed at ten, transversely equally spaced apart positions per one side of the foam sheet. On each of the ten photographs (enlarged) of each side of the cut foam sheet, the thickness of each of the intermediate layer and the surface layer is measured at every 1cm (true length) interval in the transverse direction thereof. The arithmetic mean of the measured thickness values of the intermediate layer and the surface layer represent the thickness of the intermediate layer and the surface layer, respectively, on the corresponding side of the foam sheet. The basis weights of the intermediate layer and the surface layer may be calculated by multiplying their thicknesses by the densities of the resin compositions thereof (with appropriate unit conversion). As used herein the term "resin composition" is intended to include not only the polyethylene-based resin components but also other polymeric components and inorganic components used in respective layers.

Alternatively, the basis weight of the intermediate layer and the surface layer may be determined based on the discharge amount of each layer at the time of manufacturing the multilayer foam sheet. Specifically, the basis weight B3 [g/m$^2$] of the intermediate layer may be calculated by the following equation:

$$B3 = [1000 \times X / (L \times W)]$$

where X is a discharge amount of the intermediate layer [kg/hour], L is a take-up speed of the foam sheet [m/hour], and W is the width of the foam sheet [m].

The basis weight B4 of the surface layer may be calculated by the following equation:

$$B4 = [1000 \times Y / (L \times W)]$$

where Y is a discharge amount [kg/hour] of the surface layer and L and W are as defined above.

The closed cell content of the multilayer foam sheet of the present invention is preferably 20% or more, more preferably 30% or more, more preferably 40% or more, particularly preferably 50% or more, most preferably 60% or more, in consideration of the surface protection of an article to be packaged therewith, cushioning property, appropriate slippage, stiffness, etc. The upper limit of the closed cell content is not particularly limited, but is generally 90%. In particular, when the basis weight of the foam sheet is in the range of 25 to 50 g/m$^2$, the closed cell content is preferably 40% or more from the viewpoint of maintaining good elasticity.

The closed cell content is measured according to ASTM-D2856-70, Procedure C. Specifically, the true volume Vx of the multilayer foam sheet (cut sample) is measured using Air Comparison Pycnometer Model 930 of Toshiba Beckman Inc. Using the obtained Vx, the closed cell content S (%) is calculated by the formula shown below. As the cut sample for measurement, a plurality of samples each having a size of 25 mm $\times$ 25 mm $\times$ thickness of the multilayer foam sheet are cut out from the multilayer foam sheet, and the obtained samples are stacked to obtain a cut sample for measurement of 25 mm $\times$ 25 mm $\times$ about 20 mm.

$$S\ (\%) = (Vx - W/\rho) \times 100/(Va - W/\rho)$$

where

Vx represents the true volume (cm$^3$) of the cut sample measured by the above method, which corresponds to a sum of a volume of the resin constituting the cut sample and a total volume of all the closed cells in the cut sample,
Va represents an apparent volume (cm$^3$) of the cut sample, which is measured from the outer dimension of the cut sample,
W is a total weight (g) of the cut samples used for the measurement; and
$\rho$ is a density (g/cm$^3$) of the resin composition constituting the multilayer foam sheet, which is determined after defoaming the multilayer foam sheet.

Next, a method for manufacturing the multilayer foam sheet of the present invention will be described.

The multilayer foam sheet of the present invention may be produced by a known procedure. As a typical preferred procedure thereof, there may be mentioned, for example, a method in which a melt for forming an intermediate layer and a melt for forming a surface layer are laminated in this order on both sides of a foamable melt for forming a foam layer in a coextrusion die, the obtained laminated mass being coextruded to foam and expand the foamable melt, thereby producing the multilayer foam sheet. A multilayer foam sheet, however, may also be manufactured by laminating a melt for forming the intermediate layer and a melt for forming the surface layer using a coextrusion die to obtain a resin layer having a multilayer structure, the resin layer being then laminated on each of the both sides of a separately prepared foam sheet (foam layer) with the intermediate layer facing the foam sheet.

The multilayer coextrusion method includes (1) a method of coextruding into a sheet using a flat die to form a multilayer foam sheet, and (2) a method of coextruding into a tubular form using an annular die to produce a tubular multilayer foam body, the obtained tubular multilayer foam body being then cut open along the extrusion direction to obtain a multilayer foam sheet. Among the above methods, a multilayer coextrusion method using an annular die may be preferably adopted, since it is easy to obtain a wide multilayer foam sheet having a width of 1000 mm or more.

A coextrusion method using the annular die will be described in detail below.

First, the polyethylene-based resin PE2 and an additive such as a cell controlling agent added as needed are supplied to an extruder and kneaded with heating, into which is then injected a physical blowing agent. The contents in the extruder are further kneaded to obtain a foamable melt M2 for forming a foam layer. At the same time, the polyethylene-based resin PE3, the polymeric antistatic agent and polyethylene glycol, etc., added as needed, are supplied to another extruder and kneaded with heating to obtain a melt M3 for forming an intermediate layer. Further, the polyethylene-based resin PE4, the polystyrene-based resin (C), etc. are supplied to yet another extruder and kneaded with heating to obtain a melt M4 for forming a surface layer. The obtained foamable melt M2, melt M3 and melt M4 are introduced into a coextrusion annular die, where the melt M3 for an intermediate layer is laminated on both sides of the foamable melt M2 that streams in a tubular shape. Further, the melt M4 for a surface layer is laminated on both sides thereof. The resulting laminate is then extruded in the atmosphere and allowed to foam to form a tubular foam body. The tubular foam body is cut open while being drawn along a widening device such as a mandrel to obtain a multilayer foam sheet.

As described above, the two resin layers 5 may have the same or different configurations. Therefore, the composition (kind and amount of the resin component, additive, etc.) of the melt M3 for one of the two intermediate layers 3 may be the same as or different from that of the other intermediate layer. Similarly, the composition (kind and amount of the resin component, additive, etc.) of the melt M4 for one of the two surface layers 4 may be the same as or different from that of the other surface layer.

When the multilayer foam sheet of the present invention is manufactured by the lamination coextrusion method, the melt flow rate (MFR) of the polyethylene-based resin PE2 is preferably 0.1 to 1.5 g/10 min, since a reduction of the closed cell content and a decrease in thickness recovering property of the foam layer may be effectively suppressed.

When the foam sheet of the present invention is produced by the lamination coextrusion method, the melt viscosity of the melt M4 for the surface layer tends to be high and the shear heat generation in the die tends to be large because of the presence of the polystyrene-based resin therein. As a result, there is a possibility that the closed cell content and thickness recovering property of the foam layer are apt to decrease due to generation of heat of shear. On the other hand, when the melt flow rate (MFR) of the polyethylene-based resin PE2 in the foam layer is 0.1 to 1.5 g/10 min, the influence of shear heat generation is alleviated, since the melt viscosity of the foamable melt M2 is high. Further, the cell structure is considered to be easily maintained when the polyethylene-based resin PE2 has an MFR in the above range.

In general, a thickness of the polyethylene-based resin foam sheet tends to decrease as the air in the cells is released therefrom immediately after production thereof. This decrease in thickness may be generally recovered by allowing the foam sheet to stand at a predetermined temperature for a predetermined time (aging), but there is a case where the thickness may not increase for some reasons even when it is aged. This phenomenon in which the thickness does not recover is called reduction in thickness recovering property. One of the causes of the reduction in recovering property is considered to be a decrease in closed cell content.

When the resin layers are laminated by coextrusion, it is preferred that MFRs of the polyethylene-based resin PE3 and the polyethylene-based resin PE4 are each equal to or larger than that of the polyethylene-based resin PE2, since the film-forming property of the resin layers are improved.

It is preferred that each of the melt M3 for the intermediate layer and the melt M4 for the surface layer is added with a volatile plasticizer. As the volatile plasticizer, one which has a function to lower the melt viscosity of the melt and which, after forming the resin layer (intermediate layer and surface layer), volatilizes from the intermediate layer and the surface layer and does not exist in the intermediate layer and the surface layer is used. By incorporating the volatile plasticizer into each of the melts, the extrusion temperature for each of the melt M3 for the intermediate layer and melt M4 for the surface layer can be made near the extrusion resin temperature of the foamable melt M2 for the foam layer at the time the foam sheet is co-extruded, and, additionally, melt stretchability of the intermediate layer and the surface layer resin layer in a molten state may be significantly improved. Thus, the cells of the foam layer are less likely to be broken by the heat of the resin layer (intermediate layer and surface layer) at the time of foaming and, further, the resin layer can be easily stretched following the stretching of the foam layer during the foaming thereof.

As the volatile plasticizer, one or two or more selected from aliphatic hydrocarbons or alicyclic hydrocarbons having 3 to 7 carbon atoms, aliphatic alcohols having 1 to 4 carbon atoms and aliphatic ether having 2 to 8 carbon atoms are preferably used. When a low volatile substance such as so-called lubricant is used in place of the volatile plasticizer, the lubricant may remain in the resin layer and stain a surface of an article to be packaged. In contrast, the volatile plasticizer is preferable because it efficiently plasticizes the resin in the resin layer and because it hardly remains in the obtained resin layer.

The volatile plasticizer preferably has a boiling point of 120°C or less, more preferably 80°C or less for reasons of its easy volatilization from the resin layer. When the boiling point of the volatile plasticizer is within the above range and when the foam sheet obtained by coextrusion is allowed to stand after the coextrusion, the volatile plasticizer spontaneously volatilizes and is removed from the resin layer (intermediate layer and surface layer) by heat remaining therein immediately after the coextrusion or by succeeding gas permeation at room temperature. The lower limit of the boiling point of the volatile plasticizer is generally -50°C.

The volatile plasticizer is preferably added to each of the melts M3 and M4 in an amount of 5 parts by weight to 50 parts by weight based on 100 parts by weight of each of the melts.

Further, in the melts M3 and M4, various additives may be added to the resin constituting these melts as long as the object of the present invention is not adversely affected. Examples of various additives include an antioxidant, a heat stabilizer, a weatherabilty agent, a ultraviolet absorber, a flame retardant, a filler, and an antibacterial agent. In that case, the addition amount is determined as appropriate according to the purpose and effect of the additive, but is preferably 10 parts by weight or less, more preferably 5 parts by weight or less, particularly preferably 3 parts by weight or less, based on 100 parts by weight of each of the melts.

Examples of the physical blowing agent added to the foamable melt M2 for the foam layer include organic physical blowing agents such as aliphatic hydrocarbons, e.g. propane, normal butane, isobutane, normal pentane, isopentane, normal hexane and isohexane, alicyclic hydrocarbons, e.g. as cyclopentane and cyclohexane, chlorinated hydrocarbons, e.g. methyl chloride and ethyl chloride, fluorocarbons, e.g. 1,1,1,2-tetrafluoroethan and 1,1-difluoroethan, and inorganic physical blowing agents such as nitrogen, carbon dioxide, air and water. In some cases, a decomposition-type blowing agent such as azodicarbonamide may also be used. Two or more kinds of the above-mentioned physical blowing agents may be used in combination. Of these, organic physical blowing agents are preferred because they are excellent in compatibility with polyethylene resins and foamability, and among them, those containing normal butane, isobutane, or a mixture thereof as a main component are preferred.

The addition amount of the physical blowing agent is controlled according to the kind of blowing agent and the desired apparent density. In order to obtain a multilayer foam sheet having the above-mentioned apparent density range using, for example, mixed butane composed of 30% by weight of isobutane and 70% by weight of normal butane, as a blowing agent, the addition amount of the mixed butane is preferably 3 to 30 parts by weight, more preferably 4 to 20 parts by weight, still more preferably 6 to 18 parts by weight, per 100 parts by weight of the base polymer.

A cell controlling agent is generally added to the foamable melt M2 as the main additive thereof. As the cell controlling agent, either an organic type or an inorganic type may be used. As the inorganic cell controlling agent, there may be mentioned, for example, metal borates (such as zinc borate, magnesium borate and borax), sodium chloride, aluminum hydroxide, talc, zeolite, silica, calcium carbonate and sodium bicarbonate. As the organic cell controlling agent, there may be mentioned sodium 2,2-methylenebis(4,6-tert-butylphenyl)phosphate, sodium benzoate, calcium benzoate, aluminum benzoate and sodium stearate. Further, a combination of citric acid and sodium bicarbonate, and a combination of an alkali salt of citric acid and sodium bicarbonate may also be used as the cell controlling agent. Two or more of these cell controlling agents can be used in combination. The addition amount of the cell controlling agent is preferably 0.01 to 3 parts by weight, more preferably 0.03 to 1 part by weight, per 100 parts by weight of the base polymer.

As manufacturing devices such as an annular die and an extruder, known ones which have been conventionally used in the field of extrusion foaming may be used.

The multilayer foam sheet of the present invention excels in cushioning properties and in antistatic properties and is also extremely low in the amount of low molecular weight components that may be transferred to an article packaged therewith. Therefore, the foam sheet may be suitably used as a packaging material for electronic devices and an interleaf sheet for glass plates such as liquid crystal panels.

Examples:

The present invention will be described in more detail based on examples. The present invention is not limited to the examples, however.

The polyethylene-based resin, polystyrene-based resin, polymeric antistatic agent, compatibilizing agent and cell controlling agent used in Examples and Comparative Examples are as follows.

Polyethylene-based resin:

(1) Abbreviation "LDPE1": low density polyethylene "NUC8321" manufactured by NUC Corporation (density 922 kg/m$^3$, MFR 2.4 g/10 min, melting point 112°C, melt viscosity 818 Pals (measuring temperature 190°C), melt tension 64mN);

(2) Abbreviation "LDPE2": low density polyethylene "NS-1s" manufactured by NUC Corporation (density 922 kg/m$^3$, MFR 0.4 g/10 min, melting point 110°C, melt viscosity 1,468 Pa/s (measuring temperature 190°C), melt tension 199mN)

Polystyrene-based resin:

(1) Abbreviation "GPPS1": general-purpose polystyrene "680" manufactured by PS Japan Corporation (density

1,050 kg/m$^3$ , MFR 7.0 g/10 min, Vicat softening temperature 98°C, melt viscosity 927 Pals (measuring temperature 200°C) ), melt tension 73mN)

Polymeric antistatic agent:

(1) Abbreviation "LMP": polyether-polyolefin block copolymer "PERECTRON LMP" manufactured by Sanyo Chemical Industries, Ltd. (MFR 17 g/10 min, melting point 117°C, surface resistivity $2.0 \times 10^7$ Ω)
(2) Abbreviation "SD100": ethylene-based potassium ionomer resin "ENTILA SD100" manufactured by Mitsui-Du-Pont Polychemicals Company Ltd. (MFR 5 g/10 min, melting point 92°C, surface resistivity $1.0 \times 10^7$ Ω)

Compatibilizing agent:

(1) Abbreviation "SEBS1": hydrogenated styrene-based thermoplastic elastomer "TUFTEC H1041" manufactured by Asahi Kasei Corporation, rubber content 70%

Cell controlling agent: Use was made of a cell controlling agent masterbatch containing 20% of talc (talc "HIGH FILLER #12" manufactured by Matsumura Sangyo Co., Ltd.) added to 80% by weight of low density polyethylene ("LA500M" manufactured by Japan Polyethylene Corporation).

Apparatus:

Use was made of a multilayer foam sheet manufacturing apparatus having the following extruders and a die.

Extruder for forming a foam layer: single extruder with a barrel inner diameter of 115 mm (first extruder),
Extruder for forming an intermediate layer: extruder with a barrel inner diameter of 65 mm (second extruder),
Extruder for forming a surface layer: extruder with barrel inner diameter of 50 mm (third extruder),
Die: an annular die for coextrusion having an outlet diameter of 96 mm.

Examples 1-9 and Comparative Examples 1-6

A foam sheet having a five-layer structure (Examples 1 to 9 and Comparative Examples 4 to 6) consisting of a resin layer (surface layer / intermediate layer) / a foam layer / a resin layer (intermediate layer / surface layer) and a foam sheet having a three-layer structure (Comparative Examples 1 to 3) consisting of a surface layer/ a foam layer / a surface layer were produced by the following methods. The compositions of the layers constituting each multilayer foam sheet are shown in Tables 1 and 2. Since the compositions and physical properties of the two layers (resin layers, surface layers and intermediate layers) provided on both sides of the foam layer of each multilayer foam sheet were the same with each other, the composition and physical properties of only one layer are shown in the table below. In Tables 1 and 2, "%" and "parts" are "% by weight" and "parts by weight", respectively.

The polyethylene-based resin PE2 of the kind and addition amount shown in Table 1 (Examples) and Table 2 (Comparative Examples) and 2 parts by weight of a masterbatch of talc as a cell controlling agent per 100 parts by weight of the polyethylene-based resin PE2 were fed to the first extruder and kneaded at about 200°C, to which isobutane in the amount shown in Tables 1 and 2 was then injected as a physical blowing agent. The contents were further kneaded. The kneaded mass was adjusted to the extrusion resin temperature shown in Table 3 (Examples) and Table 4 (Comparative Examples) with the first extruder to form a melt M2 for a foam layer.

At the same time, the polyethylene-based resin PE3 of the kind and amount shown in Tables 1 and 2, the polymeric antistatic agent of the kind and amount shown in Tables 1 and 2 and the polyalkylene glycol of the kind and amount shown in Tables 1 and 2 were fed to the second extruder, and kneaded at about 200°C, into which the mixed butane (normal butane/isobutane = 65% by weight/35% by weight) in the amount shown in Tables 1 and 2 as a volatile plasticizer was injected. The contents were further kneaded and adjusted to the extrusion resin temperatures shown in Tables 3 and 4 to form a melt M3 for an intermediate layer.

At the same time, further, the polyethylene-based resin PE4 of the kind and amount shown in Tables 1 and 2, the polystyrene-based resin of the amount shown in Tables 1 and 2, the compatibilizing agent of the kind and amount shown in Tables 1 and 2, the polyalkylene glycol of the kind and amount shown in Table 2 (Comparative Examples 1 and 2 only), the polymeric antistatic agents of the kind and amount shown in Table 2 (Comparative Examples 1-3 only), and 50% by weight of the talc masterbatch (Comparative Example 2 only) were fed to the third extruder and kneaded at about 200°C, into which mixed butane (normal butane/isobutane = 65% by weight /35% by weight) in the amounts shown in Tables 1 and 2 as a volatile plasticizer was injected. The contents were further kneaded and adjusted to the extrusion resin temperature shown in Tables 3 and 4 to obtain a melt M4 for a surface layer. The blending amounts of the raw materials (excluding the volatile raw materials) shown in Tables 1 and 2 are contents thereof in the surface layer 4 (namely, the mixed resin R4) and the intermediate layer 3 (namely, the antistatic resin composition R3) constituting the obtained multilayer foam sheet.

The foamable melt M2 for a foam layer, the melt M3 for an intermediate layer, and the melt M4 for a surface layer were each fed to the coextrusion annular die in the discharge amounts shown in Table 3 (Examples) and Table 4 (Comparative Examples) where the melt M3 was combined and laminated on both the inner and outer sides of the foamable melt M2 and, further, the melt M4 was combined and laminated on both the inner and outer sides of each melt M3. The obtained laminate was coextruded through the annular die to obtain a tubular multilayer foam having a five-layer structure (three-layer structure in Comparative Examples 1 to 3 in which no intermediate layers exist) in which intermediate layers were laminated on and adhered to both the inner and outer surfaces of the foam layer and, further, surface layers were laminated on and adhered to respective intermediate layers. The extruded tubular multilayer foam was drawn, while being enlarged over a tubular widening device with an outer diameter of 340 mm, at a draw rate shown in Table 3 (Examples) and Table 4 (Comparative Examples) so that the basis weight (whole basis weight) of the multilayer foam sheet was as shown in Table 5 (Examples) and Table 6 (Comparative Examples). At the same time, the extruded tubular multilayer foam was cut open in the extrusion direction to obtain a multilayer foam sheet having a width of 1,050 mm. The obtained multilayer foam sheet was allowed to stand for aging in an aging room at 40°C for 24 hours, and then measured for the physical characteristics described below.

Table 1

| Example | | | 1 | 2 | 3 | 4 | 5 | 6 | 7 | 8 | 9 |
|---|---|---|---|---|---|---|---|---|---|---|---|---|
| Surface Layer (Mixed Resin) | Polyethylene-based resin PE4 | Kind | LDPE1 | LDPE1 | LDPE1 | LDPE1 | LDPE1 | LDPE1 | LDPE1 | LDPE1 | LDPE1 |
| | | Amount (%) | 92.5 | 92.5 | 92.5 | 92.5 | 92.5 | 85 | 70 | 55 | 55 |
| | Polystyrene-based resin | Kind | GPPS1 | GPPS1 | GPPS1 | GPPS1 | GPPS1 | GPPS1 | GPPS1 | GPPS1 | GPPS1 |
| | | Amount (%) | 5 | 5 | 5 | 5 | 5 | 10 | 20 | 30 | 30 |
| | Compatibilizing agent | Kind | SEBS1 | SEBS1 | SEBS1 | SEBS1 | SEBS1 | SEBS1 | SEBS1 | SEBS1 | SEBS1 |
| | | Amount (%) | 2.5 | 2.5 | 2.5 | 2.5 | 2.5 | 5 | 10 | 15 | 15 |
| | PS(C)/PE ratio | - | 0.05 | 0.05 | 0.05 | 0.05 | 0.05 | 0.12 | 0.29 | 0.55 | 0.55 |
| | Tensile strength | MPa | 11.4 | 11.4 | 11.4 | 11.4 | 11.4 | 12.0 | 13.6 | 15.3 | 15.3 |
| | Mixed butane | Amount (part) | 15 | 10 | 15 | 15 | 15 | 15 | 15 | 15 | 15 |
| Intermediate Layer (Antistatic Resin Composition) | Polyethylene-based resin PE3 | Kind | LDPE1 | LDPE1 | LDPE1 | LDPE1 | LDPE1 | LDPE1 | LDPE1 | LDPE1 | LDPE1 |
| | | Amount (part) | 90 | 90 | 90 | 90 | 90 | 90 | 90 | 90 | 90 |
| | Polymeric antistatic agent | Kind | SD100 | SD100 | SD100 | SD100 | LMP | SD100 | SD100 | SD100 | SD100 |
| | | Amount (part) | 10 | 10 | 10 | 10 | 10 | 10 | 10 | 10 | 10 |
| | Polyalkylene glycol | Kind | PEG300 | PEG300 | PEG300 | PEG300 | - | PEG300 | PEG300 | PEG300 | PEG300 |
| | | Amount (part) | 0.5 | 0.5 | 0.5 | 0.5 | - | 0.5 | 0.5 | 0.5 | 0.5 |
| | Mixed butane | Amount (part) | 15 | 10 | 15 | 15 | 15 | 15 | 15 | 15 | 15 |

| Example | | | 1 | 2 | 3 | 4 | 5 | 6 | 7 | 8 | 9 |
|---|---|---|---|---|---|---|---|---|---|---|---|
| Foam Layer | Polyethylene-based resin PE2 | Kind | LDPE2 | LDPE2 | LDPE2 | LDPE1 | LDPE1 | LDPE1 | LDPE1 | LDPE1 | LDPE2 |
| | Cell controlling agent | Kind | talc | talc | talc | talc | talc | talc | talc | talc | talc |
| | Isobutane | Amount (part) | 12.5 | 8 | 12.5 | 12.5 | 12.5 | 12.5 | 12.5 | 12.5 | 12.5 |

Table 2

| Comparative Example | | | 1 | 2 | 3 | 4 | 5 | 6 |
|---|---|---|---|---|---|---|---|---|
| Surface Layer (Mixed Resin) | Polyethylene-based resin PE4 | Kind | LDPE1 | LDPE1 | LDPE1 | LDPE1 | LDPE1 | LDPE1 |
| | | Amount (%) | 90 | 40 | 90 | 100 | 100 | 40 |
| | Polystyrene-based resin | Kind | - | - | - | - | - | GPPS1 |
| | | Amount (%) | - | - | - | - | - | 40 |
| | Compatibilizing agent | Kind | - | - | - | - | - | SEBS |
| | | Amount (%) | - | - | - | - | - | 20 |
| | Polymeric antistatic agent | Kind | SD100 | SD100 | LMP | - | - | - |
| | | Amount (%) | 10 | 10 | 10 | - | - | - |
| | Polyalkylene glycol | Kind | PEG300 | PEG300 | | - | - | - |
| | | Amount (%) | 0.5 | 0.5 | | - | - | - |
| | Talc | Kind | - | Talc MB | | - | - | - |
| | | Amount (%) | - | 50 | | - | - | - |
| | PS(C)/PE ratio | - | 0.00 | 0.00 | - | - | - | 1.00 |
| | Tensile strength | MPa | 9.1 | 10.1 | 9.2 | 9.8 | 9.8 | 19.9 |
| | Mixed butane | Amount (part) | 15 | 15 | 15 | 15 | 15 | 15 |
| Intermediate Layer (Antistatic Resin Composition) | Polyethylene-based resin PE3 | Kind | - | - | - | LDPE1 | LDPE1 | LDPE1 |
| | | Amount (part) | - | - | - | 90 | 90 | 90 |
| | Polymeric antistatic agent | Kind | - | - | - | SD100 | SD100 | SD100 |
| | | Amount (part) | - | - | - | 10 | 10 | 10 |
| | Polyalkylene glycol | Amount (part) | - | - | - | PEG300 | PEG300 | PEG300 |
| | | Amount (part) | - | - | - | 0.5 | 0.5 | 0.5 |
| | Mixed butane | Amount (part) | - | - | - | 15 | 15 | 15 |
| Foam Layer | Polyethylene-based resin PE2 | Kind | LDPE1 | LDPE1 | LDPE1 | LDPE1 | LDPE2 | LDPE2 |
| | Cell controlling agent | Amount (part) | talc | talc | talc | talc | talc | talc |
| | Isobutane | Amount (part) | 12.5 | 12.5 | 12.5 | 12.5 | 12.5 | 12.5 |

EP 4 163 103 A1

18

Table 3

| Example | | | 1 | 2 | 3 | 4 | 5 | 6 | 7 | 8 | 9 |
|---|---|---|---|---|---|---|---|---|---|---|---|
| Surface Layer | Extruded resin temperature | °C | 120 | 120 | 120 | 120 | 120 | 120 | 120 | 120 | 120 |
| | Discharge amount (per one side) | kg/hr | 5 | 5 | 10.5 | 5 | 5 | 5 | 5 | 5 | 5 |
| Intermediate Layer | Extruded resin temperature | °C | 120 | 120 | 120 | 120 | 120 | 120 | 120 | 120 | 120 |
| | Discharge amount (per one side) | kg/hr | 10 | 10 | 10.5 | 10 | 10 | 10 | 10 | 10 | 10 |
| Foam Layer | Extruded resin temperature | °C | 110 | 110 | 110 | 110 | 110 | 110 | 110 | 110 | 110 |
| | Discharge amount | kg/hr | 110 | 110 | 110 | 110 | 110 | 110 | 110 | 110 | 110 |
| Take-up Speed | | m/min | 74 | 60 | 79 | 74 | 74 | 74 | 74 | 74 | 74 |

Table 4

| Comparative Example | | | 1 | 2 | 3 | 4 | 5 | 6 |
|---|---|---|---|---|---|---|---|---|
| Surface Layer | Extruded resin temperature | °C | 120 | 120 | 120 | 120 | 120 | 120 |
| | Discharge amount (per one side) | kg/hr | 10 | 10 | 9 | 5 | 5 | 5 |
| Intermediate Layer | Extruded resin temperature | °C | - | - | - | 120 | 120 | 120 |
| | Discharge amount (per one side) | kg/hr | - | - | - | 10 | 10 | 10 |
| Foam Layer | Extruded resin temperature | °C | 110 | 110 | 110 | 110 | 110 | 110 |
| | Discharge amount | kg/hr | 120 | 120 | 110 | 110 | 110 | 110 |
| Take-up Speed | | m/min | 74 | 74 | 69 | 74 | 74 | 74 |

The physical properties of the multilayer foam sheets obtained in Examples and Comparative Examples were measured. The measurement results are shown in Table 5 for Examples and Table 6 for Comparative Examples.

Table 5

| Example | | | 1 | 2 | 3 | 4 | 5 | 6 | 7 | 8 | 9 |
|---|---|---|---|---|---|---|---|---|---|---|---|
| Apparent Density of Foam Sheet | | kg/m³ | 30 | 37 | 30 | 30 | 30 | 30 | 30 | 27 | 30 |
| Closed Cell Content | | % | 65 | 66 | 60 | 42 | 40 | 43 | 39 | 31 | 62 |
| Thickness of Foam Sheet | | mm | 1.0 | 1.0 | 1.0 | 1.0 | 1.0 | 1.0 | 1.0 | 0.9 | 1.0 |
| Basis Weight of Foam Sheet | | g/m² | 30 | 37 | 30 | 30 | 30 | 30 | 30 | 30 | 30 |
| Basis Weight of Surface Layer B4 | | g/m² | 1.1 | 1.3 | 2.1 | 1.1 | 1.1 | 1.1 | 1.1 | 1.1 | 1.1 |
| Basis Weight of Intermediate Layer B3 | | g/m² | 2.1 | 2.6 | 2.1 | 2.1 | 2.1 | 2.1 | 2.1 | 2.1 | 2.1 |
| Basis Weight of Resin Layer (B3+B4) | | g/m² | 3.2 | 3.9 | 4.2 | 3.2 | 3.2 | 3.2 | 3.2 | 3.2 | 3.2 |
| B4/B3 Ratio | | - | 0.52 | 0.50 | 1.00 | 0.52 | 0.52 | 0.52 | 0.52 | 0.52 | 0.52 |
| Polymeric Antistatic Agent Content A | | g/m² | 0.21 | 0.26 | 0.21 | 0.21 | 0.21 | 0.21 | 0.21 | 0.21 | 0.21 |
| B4/A Ratio | | - | 5.2 | 5.0 | 10.0 | 5.2 | 5.2 | 5.2 | 5.2 | 5.2 | 5.2 |
| Antistatic Property | Surface Resistivity (Ω) | | $2\times10^{11}$ | $3\times10^{11}$ | $4\times10^{11}$ | $1\times10^{11}$ | $3\times10^{11}$ | $1\times10^{11}$ | $5\times10^{11}$ | $2\times10^{11}$ | $4\times10^{11}$ |
| | Evaluation | | A | A | A | A | A | A | A | A | A |
| Glass Stain Prevention Property | Haze Change (%) | | 0.7 | 0.6 | 0.6 | 0.8 | 0.9 | 0.9 | 0.7 | 0.8 | 0.7 |
| | Evaluation | | A | A | A | A | A | A | A | A | A |
| Handleability | Slippage | Static Frictional Force (N) | 1.9 | 1.9 | 1.9 | 2.1 | 2.0 | 2.0 | 2.3 | 1.8 | 1.8 |
| | | Evaluation | A | A | A | B | B | B | B | A | A |
| | Anti-Blocking Property | Peel Strength (gf) | 11.6 | 13.2 | 12.1 | 12.5 | 12.4 | 11.9 | 10.5 | 8.6 | 9.9 |
| | | Evaluation | A | A | A | A | A | A | A | A | A |
| | Stiffness | Sag Amount (mm) | 1 | 1 | 1 | 7 | 9 | 9 | 12 | 14 | 2 |
| | | Evaluation | A | A | A | A | A | A | B | B | A |
| Thickness Recovering Property | Initial Thickness (mm) | | 0.8 | 0.8 | 0.8 | 0.8 | 0.8 | 0.8 | 0.8 | 0.8 | 0.8 |
| | Thickness After Aging (mm) | | 1.0 | 1.0 | 1.0 | 1.0 | 1.0 | 1.0 | 1.0 | 0.9 | 1.0 |
| | Thickness Recovery Rate (%) | | 25 | 25 | 25 | 25 | 25 | 25 | 25 | 12.5 | 25 |
| | Evaluation | | A | A | A | A | A | A | A | B | A |

Table 6

| Comparative Example | | 1 | 2 | 3 | 4 | 5 | 6 |
|---|---|---|---|---|---|---|---|
| Apparent Density of Foam Sheet | kg/m$^3$ | 30 | 30 | 30 | 30 | 30 | 24 |
| Closed Cell Content | % | 49 | 52 | 51 | 39 | 60 | 17 |
| Thickness of Foam Sheet | mm | 1.0 | 1.0 | 1.0 | 1.0 | 1.0 | 0.8 |
| Basis Weight of Foam Sheet | g/m$^2$ | 30 | 30 | 30 | 30 | 30 | 30 |
| Basis Weight of Surface Layer B4 | g/m$^2$ | 2.1 | 2.1 | 2.1 | 1.1 | 1.1 | 1.1 |
| Basis Weight of Intermediate Layer B3 | g/m$^2$ | - | - | - | 2.1 | 2.1 | 2.1 |
| Basis Weight of Resin Layer (B3+B4) | g/m$^2$ | 2.1 | 2.1 | 2.1 | 3.3 | 3.3 | 3.3 |
| B4/B3 Ratio | - | - | - | - | 0.52 | 0.52 | 0.52 |
| Polymeric Antistatic Agent Content A | g/m$^2$ | - | - | - | 0.21 | 0.21 | 0.21 |
| B4/A Ratio | - | - | - | - | 5.2 | 5.2 | 5.2 |
| Antistatic Property | Surface Resistivity ($\Omega$) | $3 \times 10^{11}$ | $1 \times 10^{11}$ | $3 \times 10^{11}$ | $5 \times 10^{11}$ | $4 \times 10^{11}$ | $3 \times 10^{11}$ |
| | Evaluation | A | A | A | A | A | A |
| Glass Stain Prevention Property | Haze Change (%) | 1.7 | 4.0 | 5.6 | 0.7 | 0.8 | 0.8 |
| | Evaluation | C | D | D | A | A | A |
| Handleability | Slippage — Static Frictional Force (N) | 4.3 | 2.4 | 4.0 | 3.9 | 3.7 | 1.9 |
| | Slippage — Evaluation | D | B | D | D | D | A |
| | Anti-Blocking Property — Peel Strength (gf) | 23.9 | 10.3 | 25.6 | 22.8 | 24.1 | 8.5 |
| | Anti-Blocking Property — Evaluation | C | A | C | C | C | A |
| | Stiffness — Sag Amount (mm) | 10 | 8 | 13 | 10 | 1 | 32 |
| | Stiffness — Evaluation | B | A | B | B | A | D |
| Thickness Recovering Property | Initial Thickness (mm) | 0.8 | 0.8 | 0.8 | 0.8 | 0.8 | 0.8 |
| | Thickness After Aging (mm) | 1.0 | 1.0 | 1.0 | 1.0 | 1.0 | 0.8 |
| | Thickness Recovery Rate (%) | 25 | 25 | 25 | 25 | 25 | 0 |
| | Evaluation | A | A | A | A | A | C |

The melting point of the polyethylene-based resin used in the examples and comparative examples is a melting peak temperature measured according to JIS K7121-1987 at a heating rate of 10°C/min, using Condition (2) as the condition adjustment of the test piece. The vicut softening temperature of the polystyrene-based resin was determined according to JIS K7206 (under conditions including a test load of A method and a heating rate of the heat transfer medium of 50 ± 5°C/hour). The melt flow rate of the polyethylene-based resin and the polymeric antistatic agent was measured based on JIS K7210-1(2014) under the conditions of 190°C and a load of 2.16 kg. The melt flow rate of the polystyrene-based resin was measured based on JIS K7210-1(2014) under the conditions of 200°C and a load of 5.0 kg.

The melt viscosity ($\eta$) was measured using Capillograph 1D manufactured by Toyo Seiki Seisakusho Co., Ltd. Specifically, a cylinder having a cylinder diameter of 9.55 mm and a length of 350 mm and an orifice having a nozzle diameter of 1.0 mm and a length of 10 mm were used. The cylinder and orifice were set at 190°C for the polyethylene-based resin and at 200°C for polystyrene-based resin. Into the cylinder 15 g of the measuring sample were charged and allowed to stand for 4 minutes. The obtained molten sample was extruded in the form of a string through the orifice at a shear rate of 100 sec$^{-1}$ to measure the melt viscosity.

The melt tension was measured using Capillograph 1D manufactured by Toyo Seiki Seisakusho Co., Ltd. Specifically, a cylinder having a cylinder diameter of 9.55 mm and a length of 350 mm and an orifice having a nozzle diameter of 2.095 mm and a length of 8.0 mm were used. The cylinder and orifice were set at a temperature of 190°C. A required amount of a sample was charged in the cylinder and allowed to stand for 4 minutes. The obtained molten sample was extruded through the orifice in the form of a string at a piston speed of 10 mm/min. The extruded string was put on a tension detection pulley having a diameter of 45 mm and was taken up onto a take-up roller while increasing the take-up speed at a constant rate from 0 mm/min to 200 mm/min through a period of 4 minutes. The maximum value of the tension immediately before the strand was broken was measured. Here, the reason why the time required for the pick-up speed to reach 200 m/min from 0 m/min was set to 4 minutes is to suppress thermal deterioration of the resin and to improve the reproducibility of the obtained value. The above procedure was performed on 10 different samples. From the obtained 10 measured values, the largest three and smallest three values were removed. The arithmetic mean of the remaining four measured values was taken as the melt tension (mN).

The tensile strength of the surface layer in Tables 1 and 2 is a value measured as follows. First, raw material pellets having the same composition as that of the surface layer of each of Example and Comparative Example was melt-kneaded at 200°C using a single-screw extruder with LID equal to 50. Next, the kneaded mass was extruded and formed into a film having a thickness of 2 mm, which was further punched into a dumbbell type No. 1 to prepare a test piece. Using the test piece, the tensile strength was measured in accordance with JIS K6767(1999) as described above (n = 5).

The measurement and evaluation of each of the physical properties in Tables 5 and 6 were performed as follows.

(1) Apparent density, basis weight and thickness of the multilayer foam sheet:

The apparent density, basis weight and thickness of the multilayer foam sheet were determined by the methods described previously. First, a multilayer foam sheet was cut vertically (namely, in the thickness direction) along its transverse direction (namely, in a direction perpendicular to the extrusion direction) to obtain a rectangular test piece having a length equal to the total width [mm] of the sheet and a width of 100 mm. The same operation was repeated at different positions on the foam sheet to obtain a total of 5 test pieces. Each of the test pieces was measured for its thickness of at 1 cm intervals in the transverse direction of the foam sheet. The arithmetic mean value of the obtained thickness values was defined as the thickness [mm] of the multilayer foam sheet. Each of the test pieces was also measured for its weight [g]. The measured weight was divided by the area of the test piece [m$^2$] (namely, the width of the sheet [m] × 100 mm (0.1 m)). The arithmetic mean value of the obtained five values was defined as the basis weight [g/m$^2$] of the multilayer foam sheet. The apparent density [kg/m$^3$] of the multilayer foam sheet was determined by dividing the basis weight [g/m$^2$] of the foam sheet obtained above by the thickness [m] of the foam sheet obtained above (with appropriate unit conversion).

(2) Basis weight of surface layer and intermediate layer and thickness of resin layer:

From the discharge amount of each of the surface layer and the intermediate layer (namely, the discharge amount of the melt M4 for the surface layer and the melt M3 for the intermediate layer), the basis weights of the surface layer and the intermediate layer were calculated. Specifically, from the discharge amount X [kg/hour] per one side of the intermediate layer, the discharge amount Y [kg/hour] per one side of the surface layer, the width W [m] of the multilayer foam sheet and the take-up speed L [m/hour], each of the basis weights [g/m$^2$] was calculated by the formulas shown below. Further, the total of the intermediate layer and the surface layer was taken as the basis weight of the resin layer. Incidentally, since the multilayer foam sheet was manufactured under such conditions that the basis weights of the surface layer and the intermediate layer in one surface side thereof were the same as those in the other surface side thereof, the basis weights in only one side thereof are shown in Tables 5 and 6.

$$\text{Basis weight B3 [g/m}^2\text{] of the intermediate layer} = [1000 \times X/(L \times W)]$$

$$\text{Basis weight B4 [g/m}^2\text{] of the surface layer} = [1000 \times Y/(L \times W)]$$

(3) Evaluation of antistatic property (measurement of surface resistivity):

Three test pieces each having a length of 100 mm, a width of 100 mm and a thickness equal to that of the multilayer foam sheet were cut out from locations near the center and near the both ends in the transverse direction of the multilayer foam sheet were cut out. Each test piece was allowed to stand in an atmosphere having a temperature of 23°C and a relative humidity of 50% for 24 hours. Next, a voltage of 500 V was applied to the test piece in an atmosphere of 23°C and a relative humidity of 50% according to JIS K6271(2001), and the surface resistivity of the test piece was measured 1 minute after the voltage application. The surface resistivity was measured on both sides of the test pieces (3 test pieces × both sides: 6 times in total). The arithmetic mean value of the obtained measured values was taken as the surface resistivity. As a measuring instrument, "TR8601" manufactured by Takeda Riken Kogyo Co., Ltd. was used.
On the basis of the measured values of the surface resistivity, the antistatic property of the multilayer foam sheet was evaluated according to the following criteria.

A: Surface resistivity is $1.0 \times 10^{12}$ Ω or less
B: Surface resistivity is higher than $1.0 \times 10^{12}$ Ω and $1.0 \times 10^{13}$ Ω or less
C: Surface resistivity is higher than $1.0 \times 10^{13}$ Ω

(4) The closed cell content of the multilayer foam sheet was measured by the method described previously. First, the true volume Vx of the multilayer foam sheet (cut sample) was measured according to procedure C of ASTM-D2856-70 using an air comparison pycnometer model 930 of Toshiba Beckman Co., Ltd. Using the obtained Vx, the closed cell content S (%) was calculated from the formula shown below. As the cut sample for the measurement, a plurality of samples each having 25 mm × 25 mm × a thickness equal to the multilayer foam sheet were cut out from the multilayer foam sheet, and the obtained samples were stacked to obtain a cut sample for the measurement with a size of 25 mm × 25 mm × about 20 mm.

$$S (\%) = (Vx - W/\rho) \times 100/(Va - W/\rho)$$

wherein

Vx represents the true volume (cm$^3$) of the cut sample measured by the above method and corresponds to a sum of the volume of the resin constituting the cut sample and the total cell volume of the closed cell portion in the cut sample;
Va is an apparent volume (cm$^3$) of the cut sample calculated from the outer dimensions of the cut sample used for the measurement;
W is the total weight (g) of the cut sample used for the measurement; and
$\rho$ is the density (g/cm$^3$) of the resin composition that constitutes the multilayer foam sheet obtained by defoaming the multilayer foam sheet.

(5) Glass stain prevention property test

Glass for liquid crystal panels was used as an article to be packaged. Ten sheets of the glasses and 11 sheets of multilayer foam sheets were stacked to form a glass stack. Haze (1) in the thickness direction (glass stacking direction) of the glass stack was measured using "NDH2000" manufactured by Nippon Denshoku Kogyo Co., Ltd. Each of the glasses was then press-contacted with a sample (foam sheet obtained in Examples and Comparative Examples) and allowed to stand for 168 hours under the conditions of a temperature of 60°C and a relative humidity of 90% while applying a load of a surface pressure of 50 g / cm$^2$. The samples were then removed from the glasses. Ten sheets of the resulting glasses were stacked, and the haze (2) of the glass stack was measured in the same manner as the haze (1). A haze value (1) was subtracted from the haze value (2) to obtain an amount of change in haze (haze (%) of the glass after the test minus haze (%) of the glass before the test). The stain prevention property of the multilayer foam sheet was evaluated according to the following criteria. The smaller the haze change, the lower is the transference of low molecular weight components contained in the polymer antistatic agent of the multilayer foam sheet to the glass.

A: Amount of change in haze is less than 1
B: Amount of change in haze is 1 or more and less than 1.5
C: Amount of change in haze is 1.5 or more and less than 2.5
D: Amount of change in haze is 2.5 or more

(6) Evaluation of slippage: static frictional force

The static frictional force was measured by a method according to JIS K7125(1999). First, six square test pieces of 50 mm × 50 mm were cut out from randomly selected portions of a multilayer foam sheet such that one side of each test piece coincided with the extrusion direction of the multilayer foam sheet. Next, the test pieces were placed in an atmosphere of 23°C and a humidity of 50% for 24 hours to adjust the condition of the test pieces. Thereafter, each test piece was fixed to a bottom surface of a measuring jig having a bottom surface size of 50 mm × 50 mm and a weight of 125 g (5 g/cm$^2$), and placed on a slide glass (manufactured by Matsunami Glass Industry Co., Ltd., product name "Standard Large Sized White Edge Polishing No. 2", Product Number S9112). Then, the measuring jig was pulled in the horizontal direction at a speed of 100 mm/min, while aligning the extrusion direction of the multilayer foam sheet with the pulling direction of the measuring jig, to allow the test piece to slide on the slide glass. The first maximum point load at this time was defined as the static frictional force (N) of the test piece. Of the 6 test pieces, 3 of them were measured for the static frictional force on the sides thereof that had been in contact with a mandrel, while the remaining three were measured on their opposite sides. The arithmetic mean value (n = 6) of the static frictional forces of respective test pieces was defined as the static frictional force (N) of the multilayer foam sheet under a low load. The smaller the static frictional force is, the better is the slippage.
Based on the measured value of static frictional force, the slippage of the multilayer foam sheet was evaluated according to the following criteria.

A: Static frictional force is less than 2 N
B: Static frictional force is 2 N or more and less than 2.5 N
C: Static frictional force is 2.5 N or more and less than 3 N
D: Static frictional force is 3 N or more

(7) Anti-blocking property: peel strength

Two test pieces of multilayer foam sheet were cut out to a size of 40 mm × 150 mm, superimposed one over the other, stored at 50°C for 168 hours while being applied with a load of 33 g/cm$^2$, and then measured for the peel strength (gf) between the test pieces at a test speed of 100 mm/min. Based on the measured value, the anti-blocking property of the multilayer foam sheet was evaluated according to the following criteria. The lower the peel strength is, the better is the anti-blocking property.

A: Peel strength is less than 15 gf
B: Peel strength is 15 gf or more and less than 20 gf
C: Peel strength is 20 gf or more

(8) Evaluation of stiffness: amount of sag

Ten measurement test pieces each having a width of 200 mm and a length of 200 mm were cut out from the obtained multilayer foam sheet at arbitrarily selected ten positions such that the lengthwise direction of each test piece coincided with the extrusion direction of the sheet. Each of the obtained test pieces was fixed on a horizontal upper surface of a platform in a cantilevered state with a 100 mm length in the lengthwise direction of the test piece being horizontally projected out from the end thereof. The test piece thus sagged downward by its own weight from the upper surface of the platform. The vertical distance from the plane of the upper surface of the platform to the lowermost point of the sagged test piece was measured. Such a measurement was conducted for each of the test pieces. An arithmetic mean of the obtained ten measured values represents an amount of sag (mm). The smaller the amount of sag is, the greater is the stiffness.

A: The amount of sag is less than 10 mm
B: The amount of sag is 10 mm or more and less than 15 mm
C: The amount of sag is 15 mm or more and less than 20 mm

D: The amount of sag is 20 mm or more

(9) Thickness recovering property: Thickness recovery rate

First, a multilayer foam sheet immediately after extrusion was used as a test piece, and the thickness (initial thickness) thereof was measured in the same manner as described above. Next, the multilayer foam sheet was placed in an aging room at 40°C, stored and aged for 24 hours. The thickness of the multilayer foam sheet immediately after aging (thickness after aging) was measured, and the thickness recovery rate was determined by the following formula.

$$\text{Thickness recovery rate (\%)} = ((\text{thickness after aging - initial thickness}) / \text{initial thickness})) \times 100$$

Based on the obtained recovery rate, the thickness recovering property of the multilayer foam sheet was evaluated according to the following criteria.

A: Thickness recovery rate is 20% or more
B: Thickness recovery rate is more than 10% and less than 20%
C: Thickness recovery rate is 10% or less

Thickness recovering property is an index of a thickness increase rate when a multilayer foam sheet immediately after production is subjected to aging. The thickness of the multilayer foam sheet is generally adjusted by an addition amount of the blowing agent, a take-up speed, and the like. The thickness of the multilayer foam sheet immediately after production begins decreasing due to the dissipation of the blowing agent. In the foam sheet having excellent thickness recovering property, on the other hand, air substitution progresses during aging and the thickness thereof increases. As a result, it is possible to obtain a foam sheet having a target thickness. When the thickness recovering property is not good, the thickness does not increase even after aging, and it may be difficult to obtain the target thickness in a stable manner.

The multilayer foam sheets obtained in Examples 1 to 9 have a five-layer structure composed of surface layer / intermediate layer / foam layer / intermediate layer / surface layer in which a resin layer composed of the surface layer and the intermediate layer is laminated and adhered to each of the both sides of the foam layer. The intermediate layer contains a polymeric antistatic agent and the surface layer does not contain a polymeric antistatic agent. For this reason, the foam sheet had excellent antistatic performance and transference of low molecular weight components and the like was suppressed to an extremely small level. Further, since the surface layer contains a polystyrene-based resin in a specific amount, the handleability (slippage, anti-blocking property and stiffness) was excellent.

Examples 6 to 9 are examples in which the blending amount of the polystyrene-based resin is increased as compared with Example 4. The obtained multilayer foam sheets had a reduced closed cell content and, as a result, the stiffness was slightly lower than that of Example 4. However, they were able to be used as an interleaf sheet.

Example 9 is an example that is the same as Example 8 except that LDPE2 was used as the polyethylene-based resin of the foam layer. The multilayer foam sheet obtained had excellent stiffness without lowering the closed cell content as in Example 8.

Comparative Example 1 and Comparative Example 3 are examples in which a three-layer structure is formed without formation of an intermediate layer such that surface layers thereof are the same as the intermediate layers of Examples 4 and 5, respectively, and no polystyrene-based resin is added in the surface layers. The obtained multilayer foam sheets showed insufficient glass stain prevention property because the polymeric antistatic agent was added into the surface layer. Further, since no polystyrene-based resin was added in the surface layer, the slippage and anti-blocking property were inferior. In particular, the multilayer foam sheet of Comparative Example 1 in which the ionomer resin was incorporated into the surface layer as a polymeric antistatic agent, had reduced slippage.

Comparative Example 2 is an example in which the constitution of the surface layer in Comparative Example 1 was changed such that the surface layer was formed of 40 parts by weight of LDPE1, 50 parts by weight of the talc masterbatch and 10 parts by weight of the polymeric antistatic agent. The obtained multilayer foam sheet showed significantly reduced glass stain prevention property although the slippage and anti-blocking were improved as compared with Comparative Example 1.

Comparative Example 4 and Comparative Example 5 are examples in which multilayer foam sheets having a five-layer structure are formed such that the surface layer was composed only of LDPE1 and the intermediate layer and the foam layer were formed in the same manner as in Examples 4 and 1, respectively. The obtained multilayer foam sheets were inferior in slippage and anti-blocking property.

Comparative Example 6 is an example in which a five-layer structure was formed as a whole such that the surface layer was formed of 40 parts by weight of LDPE1, 40 parts by weight of GPPS1 and 20 parts by weight of a compatibilizer, while the intermediate layer and the foam layer were formed in the same manner as in Example 1. The obtained multilayer foam sheet showed significantly reduced closed cell content and greatly reduced stiffness. Further, the thickness recovering property was also inferior.

Explanation of symbols

> 1: Multilayer foam sheet
> 2: Foam layer
> 3: Intermediate layer
> 4: Surface layer
> 5: Resin layer

**Claims**

1. A polyethylene-based resin multilayer foam sheet comprising a foam layer, and a resin layer provided on each of both sides of the foam layer,

   > the resin layer having a multilayer structure comprising a surface layer that is located on an outermost surface side of the multilayer foam sheet, and an intermediate layer that is positioned between the surface layer and the foam layer,
   > the foam layer including a polyethylene-based resin PE2,
   > wherein
   > the intermediate layer is composed of an antistatic resin composition containing a polyethylene-based resin PE3 and a polymeric antistatic agent,
   > the surface layer is composed of a mixed resin containing a polyethylene-based resin PE4 and a polystyrene-based resin,
   > the mixed resin is substantially free of a polymeric antistatic agent,
   > a content of the polystyrene-based resin in the mixed resin is 3% by weight or more and 35% by weight or less, and
   > a surface resistivity of the polyethylene-based resin multilayer foam sheet is $1 \times 10^{13}$ Ω or less.

2. The polyethylene-based resin multilayer foam sheet according to claim 1, wherein a weight ratio of the polystyrene-based resin to the polyethylene-based resin PE4 in the mixed resin is 0.03 or more and 0.4 or less.

3. The polyethylene-based resin multilayer foam sheet according to claim 1 or 2, wherein the content of the polystyrene-based resin in the mixed resin is 3% by weight or more and 12% by weight or less.

4. The polyethylene-based resin multilayer foam sheet according to any one of claims 1 to 3, wherein a content of the polymeric antistatic agent in the antistatic resin composition is 5% by weight or more and 25% by weight or less based on the total weight of the polyethylene-based resin PE3 and the polymeric antistatic agent.

5. The polyethylene-based resin multilayer foam sheet according to any one of claims 1 to 4, wherein the polymeric antistatic agent is an ionomer resin.

6. The polyethylene-based resin multilayer foam sheet according to claim 5, wherein the antistatic resin composition contains a polyalkylene glycol and wherein a content of the polyalkylene glycol is 0.3 to 6 parts by weight based on 100 parts by weight of the total of the polyethylene-based resin PE3 and the polymeric antistatic agent.

7. The polyethylene-based resin multilayer foam sheet according to any one of claims 1 to 6, wherein a content of the polymeric antistatic agent per $1m^2$ of the intermediate layer is 0.15 g or more and 2 g or less and wherein a ratio (B4/A) of a basis weight B4 $[g/m^2]$ of the surface layer to the content A $[g/m^2]$ of the polymeric antistatic agent is 1 or more and 30 or less.

8. The polyethylene-based resin multilayer foam sheet according to any one of claims 1 to 7, wherein the basis weight B4 of the surface layer is 0.5 g/m$^2$ or more and 10 g/m$^2$ or less.

9. The polyethylene-based resin multilayer foam sheet according to any one of claims 1 to 8, wherein the polyethylene-based resin PE2 is low density polyethylene and the polyethylene-based resin PE3 is low density polyethylene.

10. The polyethylene-based resin multilayer foam sheet according to any one of claims 1 to 9, wherein a melt flow rate of the polyethylene-based resin PE2 at a temperature of 190°C and a load of 2.16 kg is 0.1 g/10min or more and 1.5 g/10min or less.

11. The polyethylene-based resin multilayer foam sheet according to any one of claims 1 to 10, having a closed cell content of 40% or more.

12. Use of the polyethylene-based resin multilayer foam sheet according to any one of claims 1 to 11 as an interleaf sheet for glass plates.

13. A method for producing a polyethylene-based resin multilayer foam sheet having a surface resistivity of $1 \times 10^{13}$ Ω or less and having a multilayer structure in which a first surface layer, a first intermediate layer, a foam layer, a second intermediate layer and a second surface layer are laminated in this order, said method comprising the steps of: providing a foamable melt M2 for forming the foam layer that contains a polyethylene-based resin PE2 and a physical blowing agent, a melt M3 for forming the first and second intermediate layers that is configured of an antistatic resin composition containing a polyethylene-based resin PE3 and a polymeric antistatic agent, and a melt M4 for forming the first and second surface layers that is configured of a mixed resin containing a polyethylene-based resin PE4 and a polystyrene-based resin and being free of a polymeric antistatic agent,

laminating the melts M4, M3, M2, M3 and M4 in this order within a die to form a laminated mass, and coextruding the laminated mass from the die to expand the foamable melt M2, wherein the polystyrene-based resin is contained in the mixed resin composition in an amount of 3% by weight or more and 35% by weight or less based on the weight of the mixed resin composition.

[FIG. 1]

## INTERNATIONAL SEARCH REPORT

International application No.

PCT/JP2021/020387

### A. CLASSIFICATION OF SUBJECT MATTER
B32B 5/18(2006.01)i; B32B 27/18(2006.01)i; B32B 27/30(2006.01)i; B32B 27/32(2006.01)i; B65D 57/00(2006.01)i; B65D 85/48(2006.01)i
FI:     B32B5/18; B32B27/30 B; B32B27/32 Z; B32B27/18 D; B65D85/48; B65D57/00 B

According to International Patent Classification (IPC) or to both national classification and IPC

### B. FIELDS SEARCHED

Minimum documentation searched (classification system followed by classification symbols)
B32B1/00-43/00; B65D57/00; B65D85/48

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2019-42988 A (JSP CO., LTD.) 22 March 2019 (2019-03-22) claims, paragraphs [0001], [0014]-[0019], [0022], [0024], [0040], [0046], [0048], [0051]-[0053], [0056], [0061] | 1-6, 8-9, 11-13 |
| A | JP 2014-237770 A (JSP CO., LTD.) 18 December 2014 (2014-12-18) entire text | 1-13 |
| A | JP 2012-35624 A (MITSUI CHEMICALS TOHCELLO, INC.) 23 February 2012 (2012-02-23) entire text | 1-13 |
| A | JP 2016-204227 A (JSP CO., LTD.) 08 December 2016 (2016-12-08) entire text | 1-13 |
| P, X | JP 2020-90026 A (JSP CO., LTD.) 11 June 2020 (2020-06-11) claims, paragraphs [0001], [0004]-[0005], [0009]-[0090], drawings | 1-13 |

☒ Further documents are listed in the continuation of Box C.    ☒ See patent family annex.

| | |
|---|---|
| *     Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 August 2021 (06.08.2021) | 24 August 2021 (24.08.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

International application No.

PCT/JP2021/020387

C (Continuation).   DOCUMENTS CONSIDERED TO BE RELEVANT

| Category* | Citation of document, with indication, where appropriate, of the relevant passages | Relevant to claim No. |
|---|---|---|
| P, X | JP 2020-138357 A (JSP CO., LTD.) 03 September 2020 (2020-09-03) claims, paragraphs [0001], [0007]-[0008], [0010], [0012]-[0074], drawings | 1-13 |

Form PCT/ISA/210 (continuation of second sheet) (January 2015)

**INTERNATIONAL SEARCH REPORT**
Information on patent family members

International application No.

PCT/JP2021/020387

| Patent Documents referred in the Report | Publication Date | Patent Family | Publication Date |
|---|---|---|---|
| JP 2019-42988 A | 22 Mar. 2019 | CN 109421345 A | |
| JP 2014-237770 A | 18 Dec. 2014 | WO 2014/196278 A1<br>CN 105263702 A<br>KR 10-2016-0014641 A | |
| JP 2012-35624 A | 23 Feb. 2012 | (Family: none) | |
| JP 2016-204227 A | 08 Dec. 2016 | US 2016/0311202 A1<br>whole document<br>KR 10-2016-0127666 A<br>TW 201704001 A | |
| JP 2020-90026 A | 11 Jun. 2020 | CN 111267437 A<br>KR 10-2020-0068587 A | |
| JP 2020-138357 A | 03 Sep. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008308695 A

- US 201600311202 A